# EUROPEAN PATENT APPLICATION

(11) **EP 4 564 941 A1**
(43) Date of publication of application: **04.06.2025**
(21) Application number: 23854227.8
(22) Date of filing: 31.07.2023
(51) Int. Cl.: H04W 56/00, H04J 3/06

(54) **TIME-SERVICE METHOD AND APPARATUS**

(30) Priority: 19.08.2022 CN 202210996949
(71) Applicant: Huawei Technologies Co., Ltd., Shenzhen, Guangdong 518129 (CN)
(72) Inventor: FAN, Qiang, Shenzhen, Guangdong 518129 (CN); LOU, Chong, Shenzhen, Guangdong 518129 (CN); LI, Hantao, Shenzhen, Guangdong 518129 (CN)
(74) Representative: Isarpatent
(86) International application number: PCT/CN2023/110238
(87) International publication number: WO 2024/037323

(57) **Abstract**

This application provides a timing method and apparatus. The method includes: A first device sends a first reference signal to a second device, where a moment at which a baseband of the first device sends the first reference signal is a first moment, and a moment at which a baseband of the second device receives the first reference signal is a second moment. The first device receives a second reference signal from the second device, where a moment at which the baseband of the first device receives the second reference signal is a third moment, and a moment at which the baseband of the second device sends the second reference signal is a fourth moment. The first device receives a first duration from the second device, where the first duration is related to the second moment and the fourth moment. The first device calculates a propagation delay between the first device and the second device based on the first moment, the third moment, and the first duration. According to the technical solutions provided in this application, the propagation delay is calculated based on the moments at which the baseband of the first device and the baseband of the second device send/receive the reference signals. Therefore, an error caused due to inaccurate channel delay estimation can be avoided.

## Description

This application claims priority to Chinese Patent Application No. 202210996949.6, filed with the China National Intellectual Property Administration on August 19, 2022 and entitled "TIMING METHOD AND APPARATUS", which is incorporated herein by reference in its entirety.

### TECHNICAL FIELD

Embodiments of this application relate to the communication field, and more specifically, to a timing method and apparatus.

### BACKGROUND

The key to improving timing accuracy is to obtain an accurate propagation delay and further compensate for the propagation delay in a timing process.

In existing propagation delay compensation (propagation delay compensation, PDC) solutions, air interface timing accuracy of about 540 ns can be achieved in a PDC solution based on timing advance (timing advance, TA), and air interface timing accuracy of about 200 ns can be achieved in a PDC solution based on round-trip time (round-trip time, RTT) measurement. However, in a power distribution automation scenario, after obtaining a time from a network device, a user equipment (user equipment, UE) needs to further perform timing for other power devices hop by hop, where an accuracy loss occurs in each hop of timing. The existing PDC solutions cannot satisfy timing accuracy requirements in the power distribution automation scenario.

Therefore, how to obtain a more accurate propagation delay to improve timing accuracy is an urgent problem to be resolved.

### SUMMARY

This application provides a timing method and apparatus. According to the method, accuracy of calculating a propagation delay can be improved, thereby improving timing accuracy.

According to a first aspect, a timing method is provided. The method may be performed by a device (for example, a first device), or may be performed by a chip, a chip system, or a circuit configured in a device. This is not limited in this application. Descriptions are provided below by using an example in which the method is performed by the first device.

The method may include: A first device sends a first reference signal to a second device. A moment at which a baseband of the first device sends the first reference signal is a first moment, and a moment at which a baseband of the second device receives the first reference signal is a second moment. The first device receives a second reference signal from the second device. A moment at which the baseband of the first device receives the second reference signal is a third moment, and a moment at which the baseband of the second device sends the second reference signal is a fourth moment. The first device receives a first duration from the second device. The first duration is related to the second moment and the fourth moment. The first device calculates a propagation delay between the first device and the second device based on the first moment, the third moment, and the first duration.

According to the method in this embodiment, the first device may calculate the propagation delay based on the moments at which the baseband of the first device and the baseband of the second device send/receive the reference signals. In this method, a channel delay between a baseband and an antenna of a device (for example, the first device or the second device) may not need to be estimated. Therefore, an error caused due to inaccurate channel delay estimation can be avoided.

With reference to the first aspect, in some implementations of the first aspect, the first duration is a difference obtained by subtracting the fourth moment from the second moment; or the first duration is a difference obtained by subtracting the second moment from the fourth moment.

With reference to the first aspect, in some implementations of the first aspect, that the first device calculates a propagation delay between the first device and the second device based on the first moment, the third moment, and the first duration includes that the first device calculates the propagation delay between the first device and the second device based on the first duration and a second duration, where the second duration is a difference obtained by subtracting the first moment from the third moment.

With reference to the first aspect, in some implementations of the first aspect, that the first device calculates the propagation delay between the first device and the second device based on the first duration and a second duration includes that the first device calculates the propagation delay between the first device and the second device based on a sum of the first duration and the second duration, where the first duration is the difference obtained by subtracting the fourth moment from the second moment; or the first device calculates the propagation delay between the first device and the second device based on a difference obtained by subtracting the first duration from the second duration, where the first duration is the difference obtained by subtracting the second moment from the fourth moment.

According to the method in this embodiment, when the first duration is the difference obtained by subtracting the fourth moment from the second moment, the first device may calculate the propagation delay between the first device and the second device based on the sum of the first duration and the second duration, where the sum of the first duration and the second duration may be used to indicate a round-trip time RTT; or when the first duration is the difference obtained by subtracting the second moment from the fourth moment, the first device may calculate the propagation delay between the first device and the second device based on the difference obtained by subtracting the first duration from the second duration, where the difference obtained by subtracting the first duration from the second duration may be used to indicate a round-trip time RTT.

With reference to the first aspect, in some implementations of the first aspect, the method further includes: The first device sends the propagation delay to the second device; or the first device sends, to the second device, a time calculated based on the propagation delay.

According to the method in this embodiment, in a scenario in which the first device performs timing for the second device, the first device may send the propagation delay to the second device after obtaining the propagation delay between the first device and the second device through calculation, so that the second device can compensate for the propagation delay based on the propagation delay to obtain a synchronization time; or after obtaining the propagation delay between the first device and the second device through calculation, the first device may compensate for the propagation delay based on the propagation delay to obtain needed synchronization time, and then send the time to the second device.

According to a second aspect, a timing method is provided. The method may be performed by a device (for example, a second device), or may be performed by a chip, a chip system, or a circuit configured in a device. This is not limited in this application. Descriptions are provided below by using an example in which the method is performed by the second device.

The method may include: A second device receives a first reference signal from a first device. A moment at which a baseband of the second device receives the first reference signal is a second moment, and a moment at which a baseband of the first device sends the first reference signal is a first moment. The second device sends a second reference signal to the first device. A moment at which the baseband of the second device sends the second reference signal is a fourth moment, and a moment at which the baseband of the first device receives the second reference signal is a third moment. The second device sends a first duration to the first device. The first duration is related to the second moment and the fourth moment. The first moment, the third moment, and the first duration are used for calculating a propagation delay between the first device and the second device.

According to the method in this embodiment, the first device may calculate the propagation delay based on the moments at which the baseband of the first device and the baseband of the second device send/receive the reference signals. In this method, a channel delay between a baseband and an antenna of a device (for example, the first device or the second device) may not need to be estimated. Therefore, an error caused due to inaccurate channel delay estimation can be avoided.

With reference to the second aspect, in some implementations of the second aspect, the first duration is a difference obtained by subtracting the fourth moment from the second moment; or the first duration is a difference obtained by subtracting the second moment from the fourth moment.

With reference to the second aspect, in some implementations of the second aspect, the method further includes: The second device receives the propagation delay from the first device; or the second device receives, from the first device, a time calculated based on the propagation delay.

According to a third aspect, a timing method is provided. The method may be performed by a device (for example, a third device), or may be performed by a chip, a chip system, or a circuit configured in a device. This is not limited in this application. Descriptions are provided below by using an example in which the method is performed by the third device.

The method may include: A third device sends a first reference signal to a fourth device through a first channel at a first moment. A moment at which the fourth device receives the first reference signal is a second moment. The third device receives a second reference signal from the fourth device through a second channel at a third moment. A moment at which the fourth device sends the second reference signal is a fourth moment. The second moment is the same as the fourth moment. The third device determines a second delay based on the first moment, the third moment, and a first delay. The first delay is a first channel delay, and the second delay is a second channel delay; or the first delay is a second channel delay, and the second delay is a first channel delay. The first channel delay is a delay of sending the first reference signal by the third device to the fourth device through the first channel, and the second channel delay is a delay of receiving the second reference signal by the third device from the fourth device through the second channel.

According to the method in this embodiment, the third device may determine the second channel delay based on the first channel delay, or may determine the first channel delay based on the second channel delay. In this way, in some scenarios in which the first channel delay is relatively accurately estimated, the second channel delay may be estimated based on the first channel delay. Correspondingly, in some scenarios in which the second channel delay is relatively accurately estimated, the first channel delay may be estimated based on the second channel delay. Therefore, accuracy of estimating a moment at which an antenna sends/receives a reference signal can be improved, thereby improving accuracy of an RTT-based propagation delay compensation mechanism.

With reference to the third aspect, in some implementations of the third aspect, the method further includes: The third device obtains the first delay.

For example, the third device may estimate the first delay based on a circuit structure of the first channel or the second channel, to obtain the first delay. For example, when the first delay is the first channel delay, the third device may estimate the first channel delay based on the circuit structure of the first channel, to obtain the first channel delay. For another example, when the first delay is the second channel delay, the third device may estimate the second channel delay based on the circuit structure of the second channel, to obtain the second channel delay.

With reference to the third aspect, in some implementations of the third aspect, that the third device determines a second delay based on the first moment, the third moment, and a first delay includes that the third device determines the second delay based on a third duration and the first delay, where the third duration is a difference obtained by subtracting the first moment from the third moment.

According to the method in this embodiment, the third device may determine another channel delay based on the third duration and one channel delay. The third duration is the difference obtained by subtracting the first moment from the third moment. In other words, the third duration may indicate a duration between a moment at which the third device sends the first reference signal to the fourth device and a moment at which the third device receives the second reference signal from the fourth device.

With reference to the third aspect, in some implementations of the third aspect, that the third device determines the second delay based on a third duration and the first delay includes that the third device determines the second delay based on a difference obtained by subtracting the first delay from the third duration.

According to the method in this embodiment, because the second moment is the same as the fourth moment, the third duration may be represented as a sum of the first delay and the second delay. Therefore, the third device may determine the second delay based on the difference obtained by subtracting the first delay from the third duration.

With reference to the third aspect, in some implementations of the third aspect, the third device is an indoor baseband processing unit BBU, and the fourth device is an active antenna unit AAU.

According to a fourth aspect, a timing method is provided. The method may be performed by a device (for example, a fourth device), or may be performed by a chip, a chip system, or a circuit configured in a device. This is not limited in this application. Descriptions are provided below by using an example in which the method is performed by the fourth device.

The method may include: A fourth device receives a first reference signal from a third device through a first channel. A moment at which the fourth device receives the first reference signal is a second moment, and a moment at which the third device sends the first reference signal is a first moment. The fourth device sends a second reference signal to the third device through a second channel. A moment at which the fourth device sends the second reference signal is a fourth moment, and a moment at which the third device receives the second reference signal is a third moment. The second moment is the same as the fourth moment. The first moment, the third moment, and a first delay are used for determining a second delay. The first delay is a first channel delay, and the second delay is a second channel delay; or the first delay is a second channel delay, and the second delay is a first channel delay. The first channel delay is a delay of sending the first reference signal by the third device to the fourth device through the first channel, and the second channel delay is a delay of receiving the second reference signal by the third device from the fourth device through the second channel.

According to the method in this embodiment, the third device may determine the second channel delay based on the first channel delay, or may determine the first channel delay based on the second channel delay. In this way, in some scenarios in which the first channel delay is relatively accurately estimated, the second channel delay may be estimated based on the first channel delay. Correspondingly, in some scenarios in which the second channel delay is relatively accurately estimated, the first channel delay may be estimated based on the second channel delay. Therefore, accuracy of estimating a moment at which an antenna sends/receives a reference signal can be improved, thereby improving accuracy of an RTT-based propagation delay compensation mechanism.

With reference to the fourth aspect, in some implementations of the fourth aspect, the third device is a baseband unit BBU, and the fourth device is an active antenna processing unit AAU.

According to a fifth aspect, a timing method is provided. The method may be performed by a device (for example, a first device), or may be performed by a chip, a chip system, or a circuit configured in a device. This is not limited in this application. Descriptions are provided below by using an example in which the method is performed by the first device.

The method may include: A first device receives information about a first path from a second device. The first path is a path through which the second device receives a first reference signal from the first device. The first device determines, based on the information about the first path, that an m^{th} path in the first path and an n^{th} path in a second path are a same path. The second path is a path through which the first device receives a second reference signal from the second device. A moment at which the second device receives the first reference signal through the m^{th} path in the first path and a moment at which the first device receives the second reference signal through the n^{th} path in the second path are used for calculating a propagation delay between the first device and the second device, where m and n are positive integers.

According to the method in this embodiment, the first device may determine, based on the information about the first path from the second device, that the m^{th} path in the path through which the second device receives the first reference signal is the same as the n^{th} path in the path through which the first device receives the second reference signal, so that the moment at which the second device receives the first reference signal through the m^{th} path and the moment at which the first device receives the second reference signal through the n^{th} path may be used for calculating the propagation delay between the first device and the second device. In this way, an error in calculating the propagation delay caused by different paths used by the first device and the second device to record the moments of receiving the reference signals is avoided. In other words, an error in calculating the propagation delay caused by different paths used by the first device and the second device to record the moments for calculating the propagation delay is avoided.

With reference to the fifth aspect, in some implementations of the fifth aspect, the method further includes: The first device receives the second reference signal from the second device through the second path. That the first device determines, based on the information about the first path, that an m^{th} path in the first path and an n^{th} path in a second path are a same path includes that the first device determines, based on the information about the first path and information about the second path, that the m^{th} path in the first path and the n^{th} path in the second path are the same path.

According to the method in this embodiment, the first device may receive the second reference signal from the second device through the second path, so that the first device can learn of the information about the second path. Further, the first device may determine, based on the information about the first path and the information about the second path, that the m^{th} path in the first path and the n^{th} path in the second path are the same path.

With reference to the fifth aspect, in some implementations of the fifth aspect, the information about the first path includes first indication information. The first indication information indicates moments at which the second device receives the first reference signal through a plurality of paths in the first path. The plurality of paths include the m^{th} path in the first path.

In an example, the first indication information may indicate specific moments at which the second device receives the first reference signal through the plurality of paths in the first path.

In another example, the first indication information may further indicate a moment (assuming that the moment is denoted as a first moment) at which the second device receives the first reference signal through one of the plurality of paths, and indicate a time difference between a moment at which the second device receives the first reference signal through another path in the plurality of paths and the first moment, to indicate the moments at which the second device receives the first reference signal through the plurality of paths.

With reference to the fifth aspect, in some implementations of the fifth aspect, the information about the first path further includes one or more of the following information: information about signal strength of the plurality of paths; or second indication information, where the second indication information indicates the m^{th} path in the first path.

According to the method in this embodiment, the second indication information may indicate the m^{th} path in the first path. Therefore, the first device can learn of a specific path used by the second device to record a moment used for calculating the propagation delay, so that the first device uses a path the same as and corresponding to the m^{th} path to record the moment used for calculating the propagation delay. In this way, an error in calculating the propagation delay caused by different paths used by the first device and the second device to record the moments for calculating the propagation delay is avoided.

With reference to the fifth aspect, in some implementations of the fifth aspect, the information about the second path includes: a moment at which the first device receives the second reference signal through the second path.

According to the method in this embodiment, the information about the second path may include the moment at which the first device receives the second reference signal through the second path, so that the first device can determine, based on the first indication information and the moment at which the first device receives the second reference signal through the second path, that the m^{th} path in the first path and the n^{th} path in the second path are the same path.

According to a sixth aspect, a timing method is provided. The method may be performed by a device (for example, a second device), or may be performed by a chip, a chip system, or a circuit configured in a device. This is not limited in this application. Descriptions are provided below by using an example in which the method is performed by the second device.

The method may include: A second device receives a first reference signal from a first device through a first path. The second device sends information about the first path to the first device. The information about the first path is used for determining that an m^{th} path in the first path and an n^{th} path in a second path are a same path. The second path is a path through which the first device receives a second reference signal from the second device. A moment at which the second device receives the first reference signal through the m^{th} path in the first path and a moment at which the first device receives the second reference signal through the n^{th} path in the second path are used for calculating a propagation delay between the first device and the second device, where m and n are positive integers.

According to the method in this embodiment, the first device may determine, based on the information about the first path from the second device, that the m^{th} path in the path through which the second device receives the first reference signal is the same as the n^{th} path in the path through which the first device receives the second reference signal, so that the moment at which the second device receives the first reference signal through the m^{th} path and the moment at which the first device receives the second reference signal through the n^{th} path may be used for calculating the propagation delay between the first device and the second device. In this way, an error in calculating the propagation delay caused by different paths used by the first device and the second device to record the moments of receiving the reference signals is avoided. In other words, an error in calculating the propagation delay caused by different paths used by the first device and the second device to record the moments for calculating the propagation delay is avoided.

With reference to the sixth aspect, in some implementations of the sixth aspect, the method further includes: The second device sends the second reference signal to the first device through the second path. Information about the second path is used for determining that the m^{th} path in the first path and the n^{th} path in the second path are the same path.

According to the method in this embodiment, the first device may receive the second reference signal from the second device through the second path, so that the first device can learn of the information about the second path. Further, the first device may determine, based on the information about the first path and the information about the second path, that the m^{th} path in the first path and the n^{th} path in the second path are the same path.

With reference to the sixth aspect, in some implementations of the sixth aspect, the information about the first path includes first indication information. The first indication information indicates moments at which the second device receives the first reference signal through a plurality of paths in the first path. The plurality of paths include the m^{th} path in the first path.

In an example, the first indication information may indicate specific moments at which the second device receives the first reference signal through the plurality of paths in the first path.

In another example, the first indication information may further indicate a moment (assuming that the moment is denoted as a first moment) at which the second device receives the first reference signal through one of the plurality of paths, and indicate a time difference between a moment at which the second device receives the first reference signal through another path in the plurality of paths and the first moment, to indicate the moments at which the second device receives the first reference signal through the plurality of paths.

With reference to the sixth aspect, in some implementations of the sixth aspect, the information about the first path further includes one or more of the following information: information about signal strength of the plurality of paths; or second indication information, where the second indication information indicates the m^{th} path in the first path.

According to the method in this embodiment, the second indication information may indicate the m^{th} path in the first path. Therefore, the first device can learn of a specific path used by the second device to record a moment used for calculating the propagation delay, so that the first device uses a path the same as and corresponding to the m^{th} path to record the moment used for calculating the propagation delay. In this way, an error in calculating the propagation delay caused by different paths used by the first device and the second device to record the moments for calculating the propagation delay is avoided.

With reference to the sixth aspect, in some implementations of the sixth aspect, the information about the second path includes: a moment at which the first device receives the second reference signal through the second path.

According to the method in this embodiment, the information about the second path may include the moment at which the first device receives the second reference signal through the second path, so that the first device can determine, based on the first indication information and the moment at which the first device receives the second reference signal through the second path, that the m^{th} path in the first path and the n^{th} path in the second path are the same path.

According to a seventh aspect, a communication apparatus is provided. The apparatus is configured to perform the method in any possible implementation of the first aspect to the sixth aspect. Specifically, the apparatus may include a unit and/or a module configured to perform the method in any possible implementation of the first aspect to the sixth aspect, for example, a processing unit and/or a communication unit.

In an implementation, the apparatus is a device (for example, a first device, a second device, a third device, or a fourth device). When the apparatus is the device (for example, the first device, the second device, the third device, or the fourth device), the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the device (for example, the first device, the second device, the third device, or the fourth device). When the apparatus is the chip, the chip system, or the circuit used in the device (for example, the first device, the second device, the third device, or the fourth device), the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to an eighth aspect, a communication apparatus is provided. The apparatus includes at least one processor, configured to execute a computer program or instructions stored in a memory, to perform the method in any possible implementation of the first aspect to the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a device (for example, a first device, a second device, a third device, or a fourth device).

In another implementation, the apparatus is a chip, a chip system, or a circuit used in the device (for example, the first device, the second device, the third device, or the fourth device).

According to a ninth aspect, this application provides a processor, configured to perform the methods according to the foregoing aspects.

Sending, obtaining/receiving, and other operations related to the processor may be understood as output, receiving/input, and other operations performed by the processor, or sending and receiving operations performed by a radio frequency circuit and an antenna, unless otherwise specified or provided that the operations conflict with actual functions or internal logic of the operations in related descriptions. This is not limited in this application.

According to a tenth aspect, a computer-readable storage medium is provided. The computer-readable medium stores program code to be executed by a device, and the program code is used to perform the method in any possible implementation of the first aspect to the sixth aspect.

According to an eleventh aspect, a computer program product including instructions is provided. When the computer program product runs on a computer, the computer is enabled to perform the method in any possible implementation of the first aspect to the sixth aspect.

According to a twelfth aspect, a chip is provided. The chip includes a processor and a communication interface. The processor reads, through the communication interface, instructions stored in a memory, to perform the method provided in any implementation of any one of the first aspect to the sixth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any implementation of any one of the first aspect to the sixth aspect.

According to a thirteenth aspect, a chip is provided. The chip includes a logic circuit and a communication interface. The communication interface is configured to receive to-be-processed data and/or information, and transmit the to-be-processed data and/or information to the logic circuit. The logic circuit is configured to perform the method provided in any implementation of any one of the first aspect to the sixth aspect.

According to a fourteenth aspect, a communication system is provided, including the first device and the second device in the methods provided in the first aspect and the second aspect, or the first device and the second device in the methods provided in the fifth aspect and the sixth aspect, or the third device and the fourth device.

### BRIEF DESCRIPTION OF DRAWINGS

FIG. 1 is a diagram of an example of a communication system to which this application is applicable;
FIG. 2 is a diagram of another example of a communication system to which this application is applicable;
FIG. 3 is a diagram in which a 5GS is used as a bridge device of a TSN;
FIG. 4 is a diagram of an example in which a base station indicates a 5G time in a unicast manner;
FIG. 5 is a diagram of an example of propagation delay compensation based on a timing advance mechanism;
FIG. 6 is a diagram of an example of propagation delay compensation based on a round-trip time measurement mechanism;
FIG. 7 is a diagram of another example of propagation delay compensation based on a round-trip time measurement mechanism;
FIG. 8 is a diagram of an example of a timing method according to an embodiment of this application;
FIG. 9 is a diagram of an example of an application scenario to which an embodiment of this application is applicable;
FIG. 10 is a diagram of another example of a timing method according to an embodiment of this application;
FIG. 11 is a diagram of an example of a specific application scenario to which an embodiment of this application is applicable;
FIG. 12 is a diagram of another example of a timing method according to an embodiment of this application;
FIG. 13 is a block diagram of a timing apparatus according to an embodiment of this application; and
FIG. 14 is a block diagram of a communication apparatus according to an embodiment of this application.

### DESCRIPTION OF EMBODIMENTS

The following describes technical solutions of embodiments in this application with reference to accompanying drawings.

The technical solutions provided in this application may be applied to various communication systems, for example, a fifth generation (5th generation, 5G) or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine-type communication (machine type communication, MTC), an Internet of things (internet of things, IoT) communication system, or another communication system. The following uses a 5G system as an example for description.

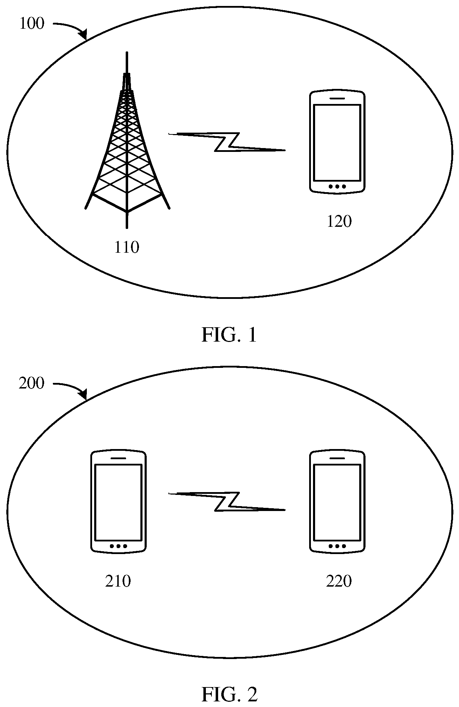

FIG. 1 is a diagram of an example of a communication system to which this application is applicable. The communication system 100 may include at least one network device, for example, a network device 110 shown in FIG. 1. The communication system 100 may further include at least one terminal device, for example, a terminal device 120 shown in FIG. 1. The network device 110 and the terminal device 120 may determine a propagation delay between the network device 110 and the terminal device 120 by sending reference signals to each other.

The technical solutions provided in this application may be further applied to a sidelink (sidelink, SL) communication scenario. In this case, the network device 110 in FIG. 1 may be alternatively replaced with another terminal device, as shown in FIG. 2.

FIG. 2 is a diagram of another example of a communication system to which this application is applicable. The communication system 200 may include at least two terminal devices, for example, a terminal device 210 and a terminal device 220 shown in FIG. 2. The terminal device 210 and the terminal device 220 may determine a propagation delay between the terminal device 210 and the terminal device 220 by sending reference signals to each other.

For ease of understanding of embodiments of this application, the following mainly describes the technical solutions of this application by using the communication system shown in FIG. 1 as an example.

A terminal device in embodiments of this application may alternatively be referred to as a user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides a user with voice/data. For example, the terminal device may be a handheld device or an in-vehicle device having a wireless connection function. Currently, some examples of the terminal are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete component.

The network device in embodiments of this application may be a device configured to communicate with a terminal device. The network device may be a macro base station, a micro base station (also referred to as a small cell), a satellite, a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like; may be a gNB or a transmission point (TRP or TP) in a 5G (for example, NR) system, or one or a group of (including a plurality of antenna panels) antenna panels of a base station in the 5G system; or may be a network node that forms a gNB or a transmission point, for example, a distributed unit (distributed unit, DU). Alternatively, the network device may be a relay station, an access point, a network device in a future 6G network, a network device in a future evolved PLMN network, or the like. This is not limited in embodiments of this application. A specific technology and a specific device form used by the network device are not limited in embodiments of this application.

In a network structure, the network device may include a central unit (central unit, CU) node or a distributed unit (distributed unit, DU) node, a RAN device including a CU node and a DU node, or a RAN device including a control plane CU node (CU-CP node), a user plane CU node (CU-UP node), and a DU node.

The network device may provide a service for a cell, and the terminal device may communicate with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and a low transmit power, and are applicable to providing high-rate data transmission services.

The network device and the terminal device may be at fixed locations, or may be movable. In embodiments of this application, the network device and the terminal device may be deployed on land, including an indoor device, an outdoor device, a handheld device, or an in-vehicle device; may be deployed on water; or may be deployed on an airplane, a balloon, and a satellite in the air. Scenarios in which the network device and the terminal device are located are not limited in embodiments of this application.

It should be understood that specific forms of the terminal device and the network device are not specially limited in embodiments of this application, and are merely examples for description herein.

It should be understood that FIG. 1 and FIG. 2 are merely simplified diagrams of examples for ease of understanding. The communication systems may further include other network devices and/or other terminal devices, which are not shown in FIG. 1 or FIG. 2.

For ease of understanding of embodiments of this application, terms or technologies in this application are described briefly below.

### 1. The 5GS supports a time-sensitive network (time-sensitive network, TNS) solution.

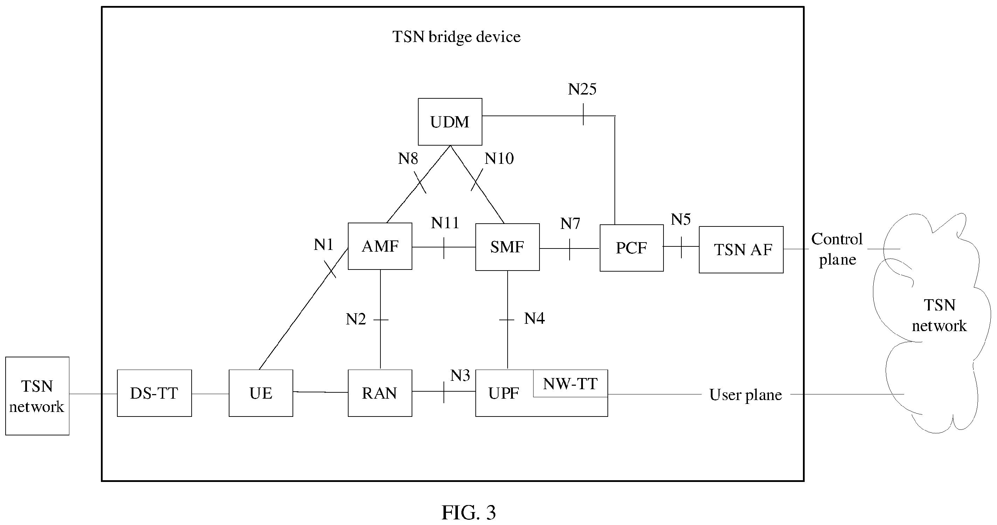

In scenarios such as industrial manufacturing, a TSN is usually used for controlling a production line. Currently, the TSN network is carried on a wired network. However, a wired manner has some inherent disadvantages, such as high cable deployment costs, security risks, and low flexibility. If the wired manner is replaced by a wireless manner, especially if the wireless manner is used for the last hop in the TSN network, the foregoing problems can be effectively avoided. The 3rd generation partnership project (3rd generation partnership project, 3GPP) Rel-16 discusses a solution of the 5th generation mobile communication system (the 5th generation mobile communication system, 5GS) supporting the TSN. The TSN network can consider the 5GS as a TSN bridge device (TSN bridge). FIG. 3 is a diagram in which a 5GS is used as a bridge device of a TSN. As shown in FIG. 3, a service data packet of the TSN network may be sent in uplink/downlink by using the 5GS.

In another aspect, in order that the TSN supports the precision time protocol (precision time protocol, PTP), the 5GS needs to adapt to the PTP. In a solution used by the 3GPP, the 5GS is used as a transparent clock. A PTP message sent by a TSN grandmaster clock (grandmaster clock, GM) can be forwarded to a TSN end station (TSN end station) through the 5GS. In addition, TSN translators are needed at connected boundary locations between the 5GS and the TSN network to process a message or a data packet related to the PTP protocol. For example, a device-side TSN translator (device-side TSN translator, DS-TT) and a network-side TSN translator (network-side TSN translator, NW-TT) are corresponding translators. The DS-TT/NW-TT may be a processing device connected to a UE/a user plane function (user plane function, UPF), or may be a logical function of a UE/UPF.

When forwarding a PTP message, the transparent clock needs to perform correction by adding a residence time of the PTP message in this node to a correctionField field in the PTP message. In order that the 5GS can obtain the residence time of the PTP message in the 5GS, 5G clock synchronization between the UPF and the UE needs be ensured. Clock synchronization between the UE and the UPF is ensured in a manner in which the UE and the UPF obtain a time from a same clock source. A specific manner is as follows: A base station and a 5G GM perform clock synchronization; the UE and the base station implement clock synchronization in an air interface synchronization manner; and the UPF and the base station implement clock synchronization according to the PTP protocol. When the PTP message enters from the UPF side, the NW-TT adds a 5G timestamp tᵢₙ to the PTP message. If a 5G time at which the DS-TT on the UE side sends the PTP message is tₒᵤₜ, the DS-TT adds (tₒᵤₜ-tᵢₙ) to the correctionField field of the PTP message.

In a 5GS-supported TSN solution, it is required for TSN time synchronization that a synchronization error between a TSN GM and a TSN slave (TSN slave) node needs to be within 1 µs. Time synchronization between user-plane nodes (a UE, a base station, and a UPF) in the 5GS is the basis for implementing a transparent clock solution.

### 2. 5G air interface time synchronization

In the R16 standard, 5G air interface time synchronization is implemented by indicating a 5G time of a reference point to a UE by a base station. The base station may perform 5G timing for the UE in a broadcast manner (system information) or a unicast manner (radio resource control (radio resource control, RRC) signaling). The following uses the unicast manner as an example for description.

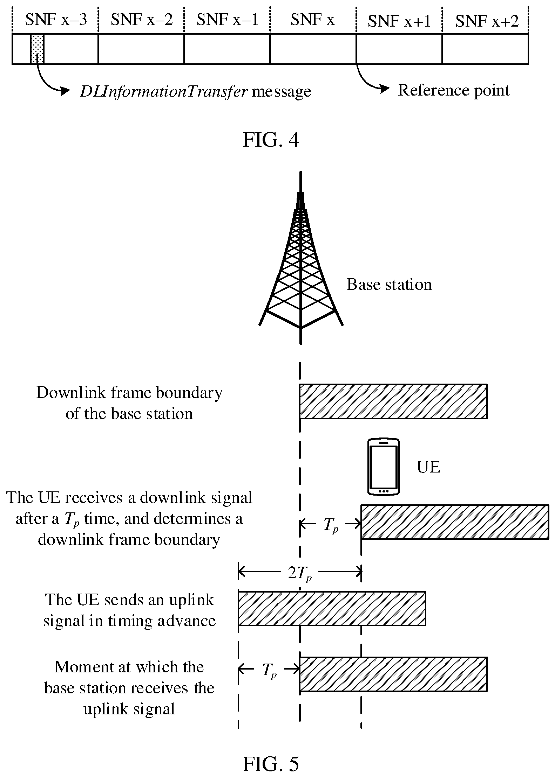

FIG. 4 is a diagram of an example in which a base station indicates a 5G time in a unicast manner. As shown in FIG. 4, the base station sends a *DLInformationTransfer* message to the UE in the unicast manner in a slot whose radio frame system frame number (system frame number, SFN) is x-3. The *DLInformationTransfer* message includes a specific 5G time (denoted as a time T) and a reference point SFN=x corresponding to the time. After receiving the unicast message, the UE may perform 5G time synchronization based on the 5G time T corresponding to an end location of a radio frame whose SFN is equal to x.

When a signal sent by the base station arrives at the UE through air propagation, a specific propagation delay (for example, denoted as *Tₚ*) appears. Therefore, when the UE performs 5G time synchronization based on the unicast message, after determining the 5G time *T* corresponding to the end location of the radio frame whose SFN is equal to x, the UE further needs to additionally add *Tₚ* to the time *T* indicated by the base station, so that a result can be used as actual 5G synchronization time. In other words, the UE needs to compensate for a propagation delay.

### 3. Propagation delay compensation (propagation delay compensation, PDC)

The key to 5G highly accurate timing is how to compensate for a propagation delay. The following describes two solutions for compensating for the propagation delay:

### (1) Propagation delay compensation based on a timing advance (timing advance, TA) mechanism

In this solution, compensation may be performed by using TA/2 as a propagation delay for the 5G time indicated by the base station. The following briefly describes the solution.

FIG. 5 is a diagram of an example of propagation delay compensation based on a timing advance mechanism.

As shown in FIG. 5, a downlink signal sent by a base station arrives at a UE after a propagation delay *Tₚ,* and the UE may determine a downlink frame boundary based on the received signal from the base station. Due to the existence of the propagation delay, a time difference of *Tₚ* exists between an actual downlink frame boundary of the base station and the downlink frame boundary determined by the UE. In an orthogonal multiple access system, to ensure orthogonality of uplink transmission and avoid intra-cell interference, the base station requires that times at which signals, from different UEs, that are in a same subframe but whose frequency domain resources are different reach the base station are basically aligned. To ensure time synchronization on a receive side (the base station side), an uplink timing advance (timing advance, TA) mechanism is used in NR. From the perspective of a UE side, a TA is essentially a negative offset (a TA value) between a start time of receiving a downlink subframe and a time of transmitting an uplink subframe. The base station may control, by appropriately controlling an offset of each UE, times at which uplink signals from different UEs arrive at the base station. As shown in FIG. 5, the UE may send an uplink signal 2*Tₚ* (a TA value in an ideal situation) before the determined downlink frame boundary. In this way, after the propagation delay of *Tₚ,* a time point at which the uplink signal arrives at the base station is aligned with the downlink frame boundary on the base station side. In this manner, times at which uplink signals sent by UEs in a cell in the same subframe arrive at the base station are aligned.

In this mechanism, the UE may approximately determine *Tₚ* based on TA/2, and perform propagation delay compensation for a 5G time, indicated by the base station, of a reference point based on *Tₚ.*

### (2) Propagation delay compensation based on round-trip time (round-trip time, RTT) measurement

In this solution, a propagation delay can be determined by measuring a round-trip time (round-trip time, RTT). A basic idea of this solution is as follows: The base station and the UE respectively send reference signals to each other. The base station measures a difference gNB_{Rx-Tx} between a moment at which the base station receives the reference signal from the UE and a moment at which the base station sends the reference signal. The UE measures a difference UE_{Rx-Tx} between a moment at which the UE receives the reference signal from the base station and a moment at which the UE sends the reference signal. An RTT between the base station and the UE may be represented by gNB_{Rx-Tx}+UE_{Rx-Tx}. In this case, RTT/2 may indicate a propagation delay. Therefore, the UE can perform propagation delay compensation for the 5G time, indicated by the base station, of the reference point based on the propagation delay.

In the current solution, the RTT determining process is implemented in two manners. In a first manner, the base station sends gNB_{Rx-Tx} to the UE, and the UE determines the RTT based on gNB_{Rx-Tx} and UE_{Rx-Tx} measured by the UE, to calculate the propagation delay. In a second manner, the UE sends UE_{Rx-Tx} to the base station, and the base station determines the RTT based on UE_{Rx-Tx} and gNB_{Rx-Tx} measured by the base station, calculates the propagation delay, and then sends the calculated propagation delay to the UE.

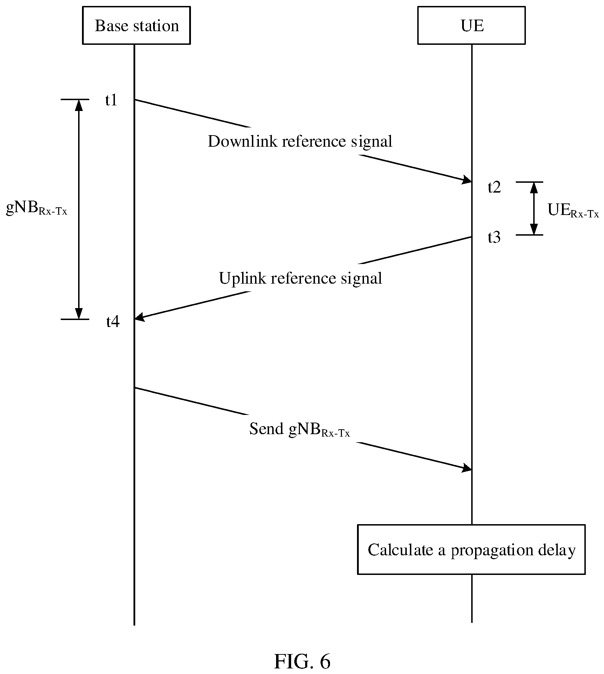

FIG. 6 is a diagram of an example of this manner. This manner may include the following steps:
Step 1: A base station sends a downlink reference signal to a UE, and records a sending moment t1.
Step 2: The UE receives the downlink reference signal from the base station, and records a receiving moment t2.
Step 3: The UE sends an uplink reference signal to the base station, and records a sending moment t3.
Step 4: The base station receives the uplink reference signal from the UE, and records a receiving moment t4.
Step 5: The base station sends, to the UE, a time difference gNB_{Rx-Tx} between the moment t4 and the moment t1, that is, gNB_{Rx-Tx}=t4-t1. A value of the time difference may be a positive number or may be a negative number. This depends on whether the base station sends the downlink reference signal before or after receiving the uplink reference signal.
Step 6: The UE calculates a propagation delay. The propagation delay is RTT/2, and RTT=gNB_{Rx-Tx}+UE_{Rx-Tx}=(t4-t1)+(t2-t3).

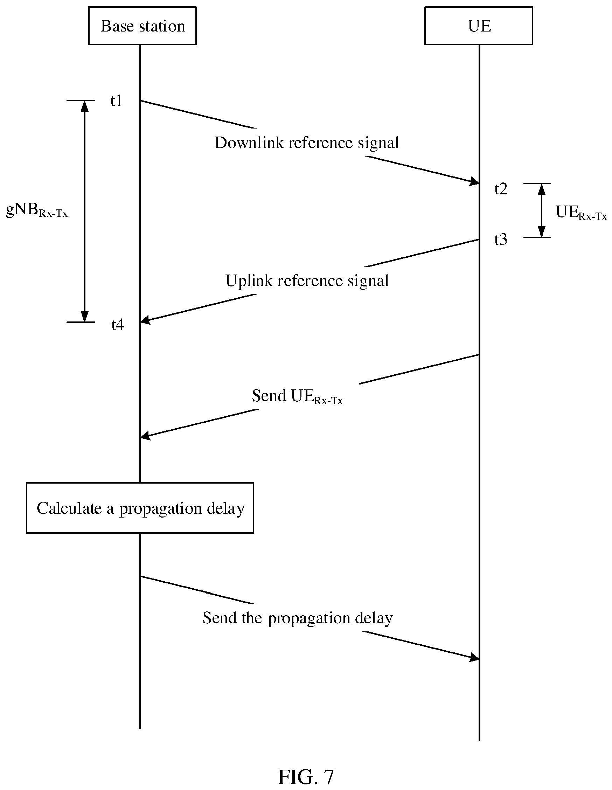

FIG. 7 is a diagram of an example of the second manner. This manner may include the following steps:
Step 1: A base station sends a downlink reference signal to a UE, and records a sending moment t1.
Step 2: The UE receives the downlink reference signal from the base station, and records a receiving moment t2.
Step 3: The UE sends an uplink reference signal to the base station, and records a sending moment t3.
Step 4: The base station receives the uplink reference signal from the UE, and records a receiving moment t4.
Step 5: The UE sends, to the base station, a time difference UE_{Rx-Tx} between the moment t2 and the moment t3, that is, UE_{Rx-Tx}=t2-t3. A value of the time difference may be a positive number or may be a negative number. This depends on whether the UE sends the uplink reference signal before or after receiving the downlink reference signal.
Step 6: The base station calculates a propagation delay based on UE_{Rx-Tx} and gNB_{Rx-Tx} measured by the base station. The propagation delay is RTT/2, and RTT=gNB_{Rx-Tx}+UE_{Rx-Tx}=(t4-t1)+(t2-t3).
Step 7: The base station sends the calculated propagation delay to the UE.

### 4. Channel delay

Because a channel between a baseband and an antenna of a device (for example, a network device or a terminal device) is formed by an electronic circuit, a specific delay exists when a signal is transmitted and processed on the channel. The delay may be referred to as a channel delay.

In this embodiment of this application, the channel delay may be classified into an uplink channel delay and a downlink channel delay. The network device is used as an example. The downlink channel delay is a delay (time) experienced when the baseband of the network device transmits a signal to the antenna, and the uplink channel delay is a delay (time) experienced when the antenna of the network device transmits a signal to the baseband. The terminal device is used as an example. The uplink channel delay is a delay (time) experienced when the baseband of the terminal device transmits a signal to the antenna, and the downlink channel delay is a delay (time) experienced when the antenna of the terminal device transmits a signal to the baseband.

It should be understood that, in embodiments of this application, the "baseband" may also be referred to as a "baseband unit (baseband unit, BBU)" or a "baseband chip", and the "antenna" may also be referred to as an "active antenna unit (active antenna unit, AAU)".

The foregoing briefly describes the terms/technologies related in this application. Details are not described again in the following embodiments.

In existing PDC solutions, air interface timing accuracy of about 540 ns can be achieved in a TA-based PDC solution, and air interface timing accuracy of about 200 ns can be achieved in an RTT measurement-based PDC solution. However, in a power distribution automation scenario, after obtaining a highly accurate time from the base station, the UE needs to further perform timing for other power devices hop by hop, where an accuracy loss occurs in each hop of timing. Currently, a power system standard supports the UE in performing timing for a power device through a maximum of 15 hops, where an accuracy loss of about 50 ns occurs in each hop. In this case, the existing PDC solutions cannot satisfy timing accuracy requirements in the power distribution automation scenario.

A main reason why the existing RTT-based propagation delay compensation mechanism cannot satisfy the timing accuracy requirement in the power distribution automation scenario is as follows: When a propagation delay is calculated, a moment at which a used device (for example, a network device or a terminal device) sends/receives a reference signal is a moment at which an antenna of the device sends/receives a reference signal, while actually, an actual moment at which the antenna sends/receives the reference signal is unknown. Currently, a practice in the conventional technologies art is as follows: A device records a moment at which a baseband sends/receives a reference signal, and estimates a channel delay between the baseband and an antenna of the device by using the baseband, to estimate, based on the estimated channel delay and the recorded moment at which the baseband sends/receives the reference signal, a moment at which the antenna sends/receives the reference signal. The estimated moment may be subsequently used for calculating a propagation delay. Because the baseband of the device usually introduces a relatively large estimation error when estimating the channel delay, an accurate propagation delay cannot be obtained, thereby affecting timing accuracy.

Therefore, this application provides a timing method and apparatus. In the method, a propagation delay is calculated based on moments at which a baseband of a first device and a baseband of a second device send/receive reference signals. Therefore, an error caused due to inaccurate channel delay estimation can be avoided.

The following describes in detail the timing method provided in embodiments of this application with reference to the accompanying drawings. The timing method provided in embodiments of this application may be applied to the communication systems shown in FIG. 1 and FIG. 2.

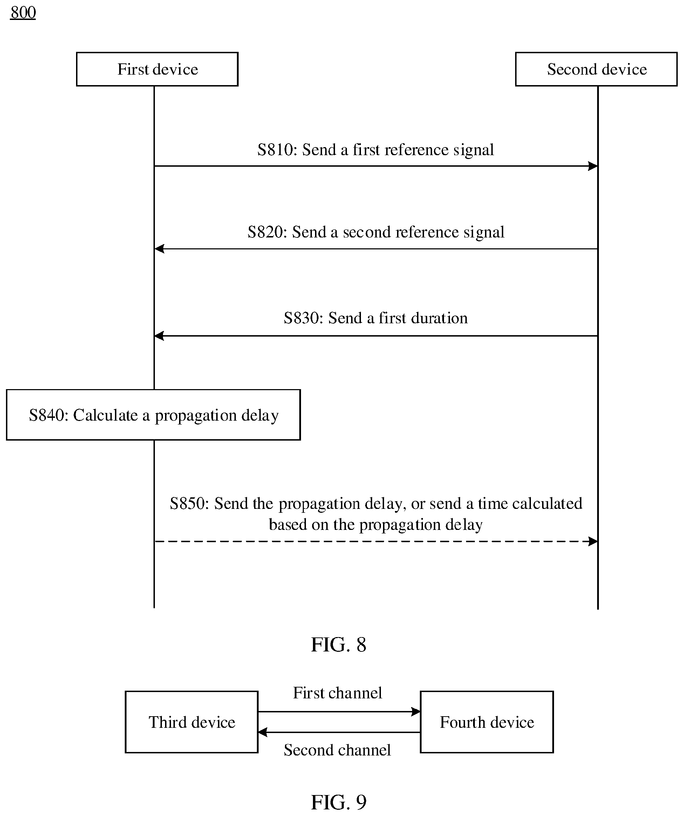

FIG. 8 is a diagram of an example of a timing method according to an embodiment of this application. The method 800 may include S810 to S840.

A first device may be a network device or a terminal device. When the first device is a terminal device, a second device may be a network device, or may be a terminal device. When the first device is a network device, the second device may be a terminal device. In this embodiment, the first device is a device configured to calculate a propagation delay.

For ease of understanding of this embodiment of this application, a scenario in which the first device is a network device and the second device is a terminal device is denoted as a scenario 1, and a scenario in which the first device is a terminal device and the second device is a network device is denoted as a scenario 2 below.

S810: The first device sends a first reference signal to the second device. Correspondingly, the second device receives the first reference signal.

In S810, the first device may send the first reference signal to the second device. The first reference signal may be sent to a baseband of the second device by using a baseband of the first device, an antenna of the first device, and an antenna of the second device.

For example, a moment at which the baseband of the first device sends the first reference signal may be denoted as a first moment, and the first moment may be recorded by the baseband of the first device; and a moment at which the baseband of the second device receives the first reference signal from the first device may be denoted as a second moment, and the second moment may be recorded by the baseband of the second device. The moment at which the baseband of the second device receives the first reference signal from the first device may be understood as a moment at which the first reference signal is received by the baseband of the second device.

For the scenario 1, that is, in a scenario in which the first device is a network device and the second device is a terminal device, the first reference signal may be a downlink reference signal sent by the network device to the terminal device, the moment at which the baseband of the network device sends the downlink reference signal is the first moment, and the moment at which the baseband of the terminal device receives the downlink reference signal is the second moment.

For the scenario 2, that is, in a scenario in which the first device is a terminal device and the second device is a network device, the first reference signal may be an uplink reference signal sent by the terminal device to the network device, the moment at which the baseband of the terminal device sends the uplink reference signal is the first moment, and the moment at which the baseband of the network device receives the uplink reference signal is the second moment.

S820: The second device sends a second reference signal to the first device. Correspondingly, the first device receives the second reference signal.

In S820, the second device may send the second reference signal to the first device. The second reference signal may be sent to the baseband of the first device by using the baseband of the second device, the antenna of the second device, and the antenna of the first device.

For example, a moment at which the baseband of the second device sends the second reference signal may be denoted as a fourth moment, and the fourth moment may be recorded by the baseband of the second device; and a moment at which the baseband of the first device receives the second reference signal from the second device may be denoted as a third moment, and the third moment may be recorded by the baseband of the first device. The moment at which the baseband of the first device receives the second reference signal from the second device may be understood as a moment at which the second reference signal is received by the baseband of the first device.

For the scenario 1, that is, in a scenario in which the first device is a network device and the second device is a terminal device, the second reference signal may be an uplink reference signal sent by the terminal device to the network device, the moment at which the baseband of the terminal device sends the uplink reference signal is the fourth moment, and the moment at which the baseband of the network device receives the uplink reference signal is the third moment.

For the scenario 2, that is, in a scenario in which the first device is a terminal device and the second device is a network device, the second reference signal may be a downlink reference signal sent by the network device to the terminal device, the moment at which the baseband of the network device sends the downlink reference signal is the fourth moment, and the moment at which the baseband of the terminal device receives the downlink reference signal is the third moment.

It should be noted that a sequence of performing S810 and S820 is not limited in this application. For example, the first device may first send the first reference signal to the second device, and then the second device sends the second reference signal to the first device. For another example, the second device may first send the second reference signal to the first device, and then the first device sends the first reference signal to the second device.

S830: The second device sends a first duration to the first device. Correspondingly, the first device receives the first duration.

The first duration is related to the second moment and the fourth moment. In other words, the first duration is related to the moment at which the baseband of the second device receives the first reference signal and the moment at which the baseband of the second device sends the second reference signal. It is assumed that the first duration is denoted as T1, the second moment is denoted as t2, and the fourth moment is denoted as t4. In this case, the first duration T1 may be expressed as T1=*f*(t2, t4), where *f*() represents a function.

In a possible implementation, the first duration may be a difference obtained by subtracting the fourth moment from the second moment, that is, T1=t2-t4.

In another possible implementation, the first duration may alternatively be a difference obtained by subtracting the second moment from the fourth moment, that is, T1=t4-t2.

S840: The first device calculates a propagation delay.

After receiving the first duration from the second device, the first device may calculate the propagation delay between the first device and the second device based on the first duration and the first moment and the third moment that are recorded by the first device.

For example, the first device may calculate the propagation delay between the first device and the second device based on the first duration and a second duration, where the second duration is a difference obtained by subtracting the first moment from the third moment. It is assumed that the second duration is denoted as T2, the third moment is denoted as t3, and the first moment is denoted as t1. In this case, the second duration T2 may be expressed as T2=t3-t1. It is assumed that the propagation delay between the first device and the second device is denoted as *Tₚ.* In this case, the propagation delay *Tₚ* may be expressed as *Tₚ*=*f*(T1, T2)=f(T1, t3-t1).

In a possible implementation, the first duration is the difference obtained by subtracting the fourth moment from the second moment, that is, T1=t2-t4. In this implementation, the first device may calculate the propagation delay *Tₚ* based on a sum of the second duration and the first duration, that is, *Tₚ*=*f*(T2+T1)=*f*((t3-t1)+(t2-t4)).

In another possible implementation, the first duration is the difference obtained by subtracting the second moment from the fourth moment, that is, T1=t4-t2. In this implementation, the first device may calculate the propagation delay *Tₚ* based on a difference obtained by subtracting the first duration from the second duration, that is, *Tₚ*=*f*(T2-T1)=*f*((t3-t1)-(t4-t2)).

Herein, (t3-t1)+(t2-t4) or (t3-t1)-(t4-t2) in the foregoing formulas may indicate a round-trip time RTT. Because the propagation delay *Tₚ* may be expressed as RTT/2, the propagation delay *Tₚ* may be expressed as *Tₚ*=((t3-t1)+(t2-t4))/2 or ((t3-t1)-(t4-t2))/2.

Optionally, in a scenario in which the second device performs timing for the first device (for example, in the scenario 2, the network device needs to perform timing for the terminal device), the method 800 further includes: The first device compensates for the propagation delay based on the propagation delay *Tₚ* obtained through calculation to obtain a synchronization time. For example, the first device may add the propagation delay *Tₚ* to a time of a reference point indicated by the second device, to obtain the needed synchronization time.

Optionally, in a scenario in which the first device performs timing for the second device (for example, in the scenario 1, the network device needs to perform timing for the terminal device), the method 800 further includes S850.

S850: The first device sends the propagation delay to the second device, or sends a time calculated based on the propagation delay.

In a possible implementation, after obtaining the propagation delay between the first device and the second device through calculation, the first device may send the propagation delay to the second device, so that the second device can compensate for the propagation delay based on the propagation delay to obtain the synchronization time. For example, the second device may add the propagation delay *Tₚ* to a time of a reference point indicated by the first device, to obtain the needed synchronization time.

In another possible implementation, after obtaining the propagation delay between the first device and the second device through calculation, the first device may compensate for the propagation delay based on the propagation delay to obtain the needed synchronization time, and then send the time to the second device. For example, the first device may determine a reference point, and add the propagation delay *Tₚ* to a time corresponding to the reference point, to obtain the needed synchronization time.

Optionally, in this embodiment, the reference point used for propagation delay compensation may be, for example, a reference point corresponding to the first moment. In other words, when the first device or the second device compensates for the propagation delay, the propagation delay *Tₚ* may be added to the first moment to obtain the needed synchronization time.

In an actual application scenario, relative locations of the first device and the second device may change, and the change may cause a change of the propagation delay between the first device and the second device. Therefore, when the propagation delay is compensated for based on the propagation delay obtained through calculation, a reference point (for example, the reference point corresponding to the first moment) corresponding to a moment used for calculating the propagation delay may be determined as a reference point used for propagation delay compensation. In this way, even if the propagation delay between the first device and the second device changes, propagation delay compensation can be relatively accurately implemented, thereby improving timing accuracy.

It should be understood that the reference point used for propagation delay compensation may alternatively be another reference point, for example, a reference point corresponding to the third moment. This is not limited in this application.

According to the method in this embodiment, the first device may calculate the propagation delay based on moments at which the baseband of the first device and the baseband of the second device send/receive reference signals. In this method, a channel delay between a baseband and an antenna of a device (for example, the first device or the second device) may not need to be estimated. Therefore, an error caused due to inaccurate channel delay estimation can be avoided.

In an RTT-based propagation delay compensation mechanism, if the propagation delay is calculated based on a moment at which the antenna of the device (for example, a network device or a terminal device) sends/receives a reference signal, the moment at which the antenna of the device sends/receives the reference signal needs to be estimated. The network device is used as an example. In a downlink direction, a moment at which an antenna of the network device sends a downlink reference signal needs to be estimated based on a moment at which a baseband of the network device sends the downlink reference signal and an estimated downlink channel delay. Correspondingly, in an uplink direction, a moment at which the antenna of the network device receives an uplink reference signal needs to be estimated based on a moment at which the baseband of the network device receives the uplink reference signal and an estimated uplink channel delay. Similarly, the terminal device is used as an example. In an uplink direction, a moment at which an antenna of the terminal device sends an uplink reference signal needs to be estimated based on a moment at which a baseband of the terminal device sends the uplink reference signal and an estimated uplink channel delay. Correspondingly, in a downlink direction, a moment at which the antenna of the terminal device receives a downlink reference signal needs to be estimated based on a moment at which the baseband of the terminal device receives the downlink reference signal and an estimated downlink channel delay.

Usually, the downlink channel delay is different from the uplink channel delay. This specifically depends on a circuit design. For example, in some scenarios, estimation of the downlink channel delay is relatively accurate; and in some other scenarios, estimation of the uplink channel delay is relatively accurate.

In view of this, this application further provides a timing method and apparatus. In the method, a channel delay may be determined based on another channel delay. For example, if the downlink channel delay is relatively accurately estimated in a specific scenario, the uplink channel delay may be determined based on the downlink channel delay. Similarly, if the uplink channel delay is relatively accurately estimated in a specific scenario, the downlink channel delay may be determined based on the uplink channel delay. Therefore, accuracy of estimating a moment at which an antenna sends/receives a reference signal can be improved, thereby improving accuracy of the RTT-based propagation delay compensation mechanism.

FIG. 9 is a diagram of an example of an application scenario to which an embodiment of this application is applicable. A third device may be, for example, a baseband unit (BBU), and a fourth device may be, for example, an active antenna unit (AAU). The BBU and the AAU may be deployed in a network device, or may be deployed in a terminal device. This is not limited in this application.

In the application scenario shown in FIG. 9, the third device may send a reference signal (for example, denoted as a first reference signal) to the fourth device through a first channel. Correspondingly, the fourth device may receive the first reference signal through the first channel. The fourth device may send a reference signal (for example, denoted as a second reference signal) to the third device through a second channel. Correspondingly, the third device may receive the second reference signal through the second channel.

For ease of description, a delay in sending the first reference signal by the third device to the fourth device through the first channel is referred to as a first channel delay, and a delay in sending the second reference signal by the fourth device to the third device through the second channel is referred to as a second channel delay. The first channel delay may also be understood as a duration between a moment at which the third device sends the first reference signal to the fourth device through the first channel and a moment at which the fourth device receives the first reference signal. The second channel delay may also be understood as a duration between a moment at which the fourth device sends the second reference signal to the third device through the second channel and a moment at which the third device receives the second reference signal.

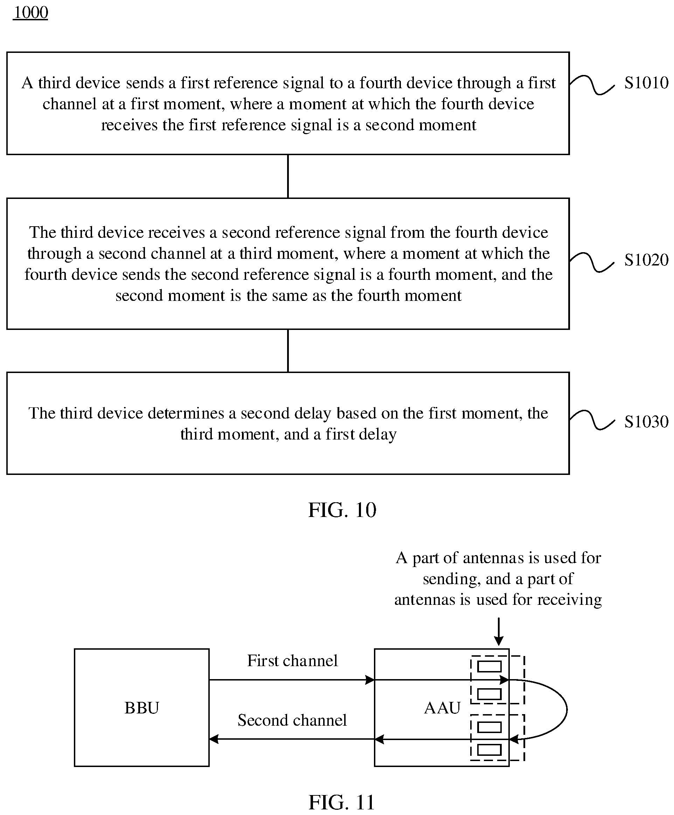

FIG. 10 is a diagram of another example of a timing method according to an embodiment of this application. The method 1000 may include S1010 and S1020.

S1010: A third device sends a first reference signal to a fourth device through a first channel at a first moment, where a moment at which the fourth device receives the first reference signal is a second moment.

That the moment at which the fourth device receives the first reference signal is the second moment may also be understood as that a moment at which the first reference signal is received by the fourth device is the second moment.

S1020: The third device receives a second reference signal from the fourth device through a second channel at a third moment, where a moment at which the fourth device sends the second reference signal is a fourth moment, and the second moment is the same as the fourth moment.

That the third device receives the second reference signal from the fourth device through the second channel at the third moment may also be understood as that a moment at which the second reference signal is received by the third device through the second channel is the third moment. That the second moment is the same as the fourth moment may also be understood as that the moment at which the fourth device receives the first reference signal from the third device is the same as the moment at which the fourth device sends the second reference signal to the third device; or may be understood as that the fourth device sends the second reference signal to the fourth device when receiving the first reference signal from the third device; or may be understood as that the fourth device immediately sends the second reference signal to the fourth device after receiving the first reference signal from the third device.

Because there may be a small time difference between the moment at which the fourth device receives the first reference signal and the moment at which the fourth device sends the second reference signal, the second moment is the same as the fourth moment. It may also be understood that the second moment is approximately the same as the fourth moment. In other words, when the time difference is not considered, it may be considered that the second moment is the same as the fourth moment.

In an example, the first reference signal and the second reference signal may be considered as a same reference signal. For example, after receiving the first reference signal, the fourth device may forward the first reference signal to the third device at the same moment at which the first reference signal is received, so that the third device can receive the first reference signal (in other words, the second reference signal) at the third moment. In another example, the first reference signal and the second reference signal may be different reference signals. For example, after receiving the first reference signal, the fourth device may generate the second reference signal at the same moment at which the first reference signal is received, and send the second reference signal to the third device, so that the third device can receive the second reference signal at the third moment. Same moments may also be understood as approximately same moments.

S1030: The third device determines a second delay based on the first moment, the third moment, and a first delay.

In a possible case, the first delay is a first channel delay, and the second delay is a second channel delay. In another possible case, the first delay is a second channel delay, and the second delay is a first channel delay. In other words, the third device may determine the second channel delay based on the first moment, the third moment, and the first channel delay; or the third device may further determine the first channel delay based on the first moment, the third moment, and the second channel delay.

Optionally, the method 1000 further includes: The third device obtains the first delay. For example, the third device may estimate the first delay based on a circuit structure of the first channel or the second channel, to obtain the first delay. For example, when the first delay is the first channel delay, the third device may estimate the first channel delay based on the circuit structure of the first channel, to obtain the first channel delay. For another example, when the first delay is the second channel delay, the third device may estimate the second channel delay based on the circuit structure of the second channel, to obtain the second channel delay.

In a possible implementation, the third device may determine the second delay based on the third duration and the first delay. The third duration is a difference obtained by subtracting the first moment from the third moment. In other words, the third duration may indicate a duration between the moment at which the third device sends the first reference signal to the fourth device and the moment at which the third device receives the second reference signal from the fourth device.

For example, it is assumed that the third moment is denoted as t3, the first moment is denoted as t1, and the third duration is denoted as δt. In this case, the third duration δt may be expressed as δt=t3-t1. It is assumed that the first delay is denoted as △1, and the second delay is denoted as △2. In this case, the second delay △2 may be expressed as △2=*f*(δt, △1)=*f*(t3-t1, △1).

In a possible implementation, that the third device determines the second delay based on the third duration and the first delay includes that the third device determines the second delay based on a difference obtained by subtracting the first delay from the third duration, that is, △2=*f*(δt-△1)=*f*(t3-t1-△1). In an optional embodiment, a second duration is the difference obtained by subtracting the first delay from the third duration, that is, △2=δt-△1=t3-t1-△1.

Optionally, in this embodiment, the third device may be a BBU, and the fourth device may be an AAU.

For ease of understanding of this embodiment, the following describes the method 1000 by using a specific application scenario as an example.

FIG. 11 is a diagram of an example of a specific application scenario to which the method 1000 is applicable. A third device is specifically a BBU, and a fourth device is specifically an AAU. The BBU and the AAU are deployed, for example, in a network device.

In the application scenario shown in FIG. 11, the network device may determine an uplink channel delay based on a downlink channel delay. The downlink channel delay is a delay in sending a reference signal by the BBU to the AAU through a first channel, and the uplink channel delay is a delay in sending a reference signal by the AAU to the BBU through a second channel. Specific steps of determining the uplink channel delay based on the downlink channel delay by the network device are as follows:
Step 1: The BBU sends a downlink reference signal to the AAU through the first channel.

The BBU may generate a downlink reference signal, and send the downlink reference signal to the AAU through the first channel. A moment at which the BBU sends the downlink reference signal is denoted as, for example, t1. The BBU may send the downlink reference signal at a downlink frame boundary location, or may send the downlink reference signal at a fixed offset location relative to a downlink frame boundary. This is not limited in this application.

Step 2: The AAU receives the downlink reference signal from the BBU, and sends the downlink reference signal to the BBU at a same moment.

For example, after receiving the downlink reference signal from the BBU, the AAU may send the downlink reference signal by using a part of antennas (for example, denoted as a first part of antennas), and receive, by using another part of antennas, the downlink reference signal sent by the first part of antennas. In other words, after receiving the downlink reference signal, the AAU may simultaneously send and receive the downlink reference signal at a same frequency. Then, the AAU may forward the received downlink reference signal to the BBU through the second channel. A moment at which the BBU receives the downlink reference signal is denoted as, for example, t3. In this embodiment, the moment at which the AAU receives the downlink reference signal from the BBU through the first channel is the same as the moment at which the AAU sends the downlink reference signal to the BBU through the second channel. Same moments may also be understood as approximately same moments.

It may be understood that, if t1 is a moment at which the BBU sends the downlink reference signal at the downlink frame boundary location, t3 is a moment at which the BBU receives the downlink reference signal at an uplink frame boundary location; and if t1 is a moment at which the BBU sends the downlink reference signal at the fixed offset location relative to the downlink frame boundary, t3 is a moment at which the BBU receives the downlink reference signal at a same fixed offset location relative to an uplink frame boundary.

Step 3: The BBU determines the uplink channel delay.

For example, the BBU may determine the uplink channel delay based on t1, t3, and the downlink channel delay. The BBU may estimate the downlink channel delay based on a circuit structure of a downlink channel, to obtain the downlink channel delay. It is assumed that the downlink channel delay is denoted as △1, and the uplink channel delay is denoted as △2. In this case, the uplink channel delay △2 may be expressed as △2=t3-t1-△1.

It should be understood that, in the application scenario shown in FIG. 11, the downlink channel delay may be further estimated based on the uplink channel delay. In this case, the downlink channel delay △1 may be expressed as △1=t3-t1-△2.

It should be further understood that the application scenario shown in FIG. 11 is described by using only an example in which the BBU and the AAU are deployed in the network device. In some scenarios, the BBU and the AAU may be alternatively deployed in a terminal device, so that the terminal device can estimate an uplink channel delay or a downlink channel delay by using the same method.

According to the method in this embodiment, the third device may determine the second channel delay based on the first channel delay, or may determine the first channel delay based on the second channel delay. In this way, in some scenarios in which the first channel delay is relatively accurately estimated, the second channel delay may be estimated based on the first channel delay. Correspondingly, in some scenarios in which the second channel delay is relatively accurately estimated, the first channel delay may be estimated based on the second channel delay. Therefore, accuracy of estimating a moment at which an antenna sends/receives a reference signal can be improved, thereby improving accuracy of an RTT-based propagation delay compensation mechanism.

Another main reason why the existing RTT-based propagation delay compensation mechanism cannot satisfy the timing accuracy requirement in the power distribution automation scenario is as follows: In a multipath scenario, when recording moments of receiving reference signals, the first device and the second device use different paths for transmitting the reference signals. For example, the first device is a network device, and the second device is a terminal device. It is assumed that there are five paths for transmitting a reference signal between the network device and the terminal device, and the five paths are respectively denoted as a path #1, a path #2, a path #3, a path #4, and a path #5. The terminal device may receive a downlink reference signal from the network device through the five paths. Correspondingly, the network device may receive an uplink reference signal from the terminal device through the five paths. In a possible case, the terminal device detects downlink reference signals on the path #3 to the path #5 when receiving the downlink reference signal, and the network device detects uplink reference signals on the path #1 to the path #5 when receiving the uplink reference signal. Therefore, according to a rule of using an initial path by default, a moment, recorded by the terminal device, of receiving the downlink reference signal may be a moment at which the terminal device receives the downlink reference signal through the path #3, and a moment, recorded by the network device, of receiving the uplink reference signal may be a moment at which the network device receives the uplink reference signal through the path #1. Because the paths used by the network device and the terminal device to record the moments of receiving the reference signals are different, an error is introduced when a propagation delay is calculated based on the recorded moments of receiving the reference signals, thereby affecting timing accuracy.

Therefore, this application further provides a timing method and apparatus. In the method, a first device may determine, based on information related to a path from a second device, that an m^{th} path in a path through which the second device receives a reference signal is the same as an n^{th} path in a path through which the first device receives a reference signal, so that a moment at which the second device receives the reference signal through the m^{th} path and a moment at which the first device receives the reference signal through the n^{th} path may be used for calculating a propagation delay between the first device and the second device. In this way, an error in calculating the propagation delay caused by different paths used by the first device and the second device to record the moments of receiving the reference signals is avoided. In other words, an error in calculating the propagation delay caused by different paths used by the first device and the second device to record the moments for calculating the propagation delay is avoided.

For brevity, the propagation delay between the first device and the second device is briefly referred to as a propagation delay below.

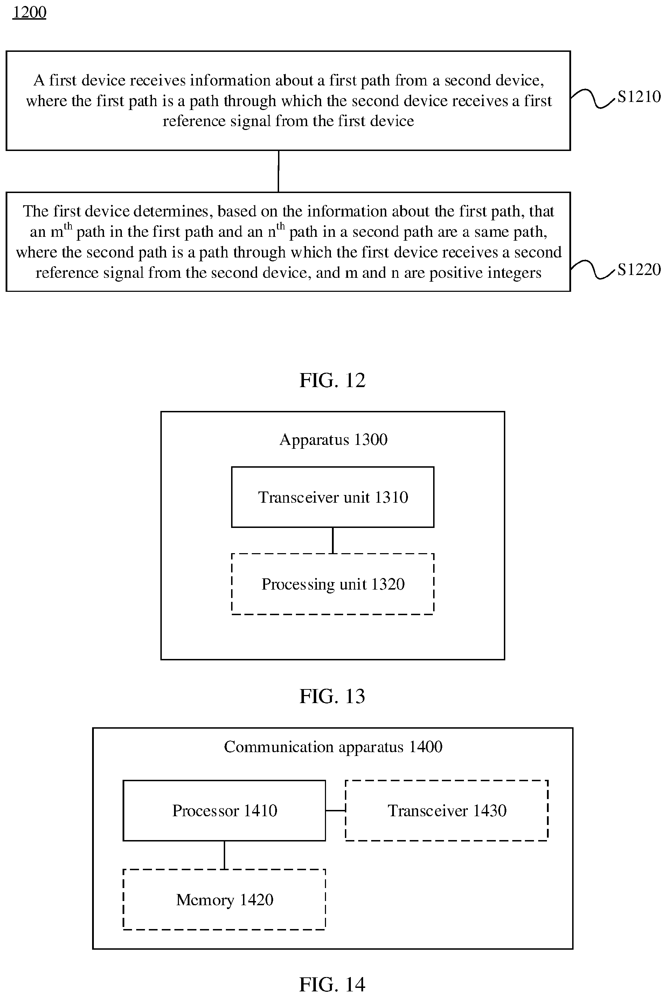

FIG. 12 is a diagram of another example of a timing method according to an embodiment of this application. The method 1200 may include S1210 and S1220.

S1210: A first device receives information about a first path from a second device, where the first path is a path through which the second device receives a first reference signal from the first device.

The path through which the second device receives the first reference signal from the first device may also be understood as a path through which the second device successfully receives the first reference signal from the first device, or may be understood as a path through which the second device can detect the first reference signal.

In this embodiment, the first path may include one or more paths. For ease of description, an example in which the first path includes five paths is used for description below. The five paths are denoted as, for example, a path #1, a path #2, a path #3, a path #4, and a path #5.

For example, the information about the first path may include first indication information.

In a possible implementation, the first indication information may indicate moments at which the second device receives the first reference signal through a plurality of paths in the first path. The plurality of paths include an m^{th} path in the first path. A moment at which the second device receives the first reference signal through the m^{th} path is a moment that is recorded by the second device and that is used for calculating a propagation delay. Herein, m is a positive integer. The plurality of paths may be all paths in the first path, or may be a part of paths in the first path. This is not limited in this application. For example, if a moment at which the second device receives the first reference signal through the path #2 is a moment that is recorded by the second device and that is used for calculating the propagation delay, the plurality of paths include the path #2. For example, the plurality of paths may include the path #2, the path #4, and the path #5. In this case, the first indication information may indicate, for example, moments at which the second device receives the first reference signal through the path #2, the path #4, and the path #5.

In an example, the first indication information may indicate specific moments at which the second device receives the first reference signal through the plurality of paths in the first path. For example, the first indication information may separately indicate that a moment at which the second device receives the first reference signal through the path #2 is t2, a moment at which the second device receives the first reference signal through the path #4 is t4, and a moment at which the second device receives the first reference signal through the path #5 is t5.

In another example, the first indication information may indicate a moment (assuming that the moment is denoted as a first moment) at which the second device receives the first reference signal through one of the plurality of paths, and indicate a time difference between a moment at which the second device receives the first reference signal through another path in the plurality of paths and the first moment, to indicate the moments at which the second device receives the first reference signal through the plurality of paths. For example, the first indication information may indicate that a moment at which the second device receives the first reference signal through the path #2 is t2, a time difference between the moment at which the second device receives the first reference signal through the path #4 and t2 is △1, and a time difference between the moment at which the second device receives the first reference signal through the path #5 and t2 is △2. In an optional example, the first indication information may further indicate that a moment at which the second device receives the first reference signal through the path #2 is t2, a time difference between a moment at which the second device receives the first reference signal through the path #4 and t2 is △1, and a time difference between a moment at which the second device receives the first reference signal through the path #5 and a moment at which the second device receives the first reference signal through the path #4 is △3, to indicate the moments at which the second device receives the first reference signal through the path #2, the path #4, and the path #5.

In another possible implementation, the first indication information may indicate a time difference between moments at which the second device receives the first reference signal through different paths in the plurality of paths. For example, if the plurality of paths include the path #2, the path #4, and the path #5, the first indication information may indicate that a time difference between a moment at which the second device receives the reference signal through the path #2 and a moment at which the second device receives the first reference signal through the path #4 is △1, and indicate that a time difference between the moment at which the second device receives the reference signal through the path #4 and a moment at which the second device receives the first reference signal through the path #5 is △3.

Optionally, the information about the first path may further include: information about signal strength of the plurality of paths; or second indication information, where the second indication information may indicate the m^{th} path in the first path. The moment at which the second device receives the first reference signal through the m^{th} path is a moment that is recorded by the second device and that is used for calculating the propagation delay, where m is a positive integer.

In an example, the information about the first path includes the information about the signal strength of the plurality of paths. The information about the signal strength of the plurality of paths may also be understood as information about strength of signals received through the plurality of paths.

In a possible case, the information about the first path includes information about signal strength of each of the plurality of paths. For example, if the plurality of paths include, for example, the path #2, the path #4, and the path #5, the information about the first path further includes: information about signal strength of the first reference signal received by the second device through the path #2, information about signal strength of the first reference signal received by the second device through the path #4, and information about signal strength of the first reference signal received by the second device through the path #5.

In another possible case, the information about the first path includes information about signal strength of a part of the plurality of paths. For example, if the plurality of paths include, for example, the path #2, the path #4, and the path #5, the information about the first path further includes: information about signal strength of the first reference signal received by the second device through the part of the path #2, the path #4, or the path #5.

In another example, the information about the first path includes the second indication information, and the second indication information indicates the m^{th} path in the first path. For example, if the moment at which the second device receives the first reference signal through the path #2 (the 2^{nd} path in the first path) is a moment that is recorded by the second device and that is used for calculating the propagation delay, the second indication information may indicate the path #2.

Specifically, the second indication information may indicate, for example, a path by indicating an index of the path. For example, if the second device successively receives the first reference signal through the path #2, the path #4, and the path #5, indexes of the path #2, the path #4, and the path #5 may be 0, 1, and 2 respectively. In this case, the second indication information may indicate the path #2 by indicating the index 0.

Optionally, the method 1200 further includes: The first device sends the first reference signal to the second device through the first path, and correspondingly, the second device may receive the first reference signal through the first path, so that the second device can learn of the information about the first path and send the information about the first path to the first device in S1210.

S1220: The first device determines, based on the information about the first path, that the m^{th} path in the first path and an n^{th} path in a second path are a same path, where the second path is a path through which the first device receives a second reference signal from the second device, and m and n are positive integers.

The path through which the first device receives the second reference signal from the second device may also be understood as a path through which the first device successfully receives the second reference signal from the second device, or may be understood as a path through which the first device can detect the second reference signal.

In this embodiment, the second path may include one or more paths. For ease of description, an example in which the second path includes six paths is used for description below. The six paths are denoted as, for example, a path #1', a path #2', a path #3', a path #4', a path #5', and a path #6'.

For example, the first device may determine, based on the information about the first path and the information about the second path, that the m^{th} path in the first path and the n^{th} path in the second path are the same path.

In an implementation, the information about the second path includes, for example, a moment at which the first device receives the second reference signal through the second path. In this implementation, the first device may determine, based on the first indication information and the moment at which the first device receives the second reference signal through the second path, that the m^{th} path in the first path and the n^{th} path in the second path are the same path.

For example, the information about the second path includes, for example, moments at which the first device receives the second reference signal through the path #1' to the path #5', and the moments at which the first device receives the second reference signal through the path #1' to the path #5' may be respectively denoted as t1', t2', t3', t4', t5', and t6'. For example, the first indication information indicates moments (for example, t2, t3, and t4) at which the second device receives the first reference signal through the plurality of paths (for example, the path #2, the path #4, and the path #5) in the first path. In this case, the first device may compare time differences between t1', t2', t3', t4', t5', and t6' with time differences between t2, t4, and t5, to determine three paths, in the path #1' to the path #5', the same as and corresponding to the path #2, the path #4, and the path #5. For example, if a time difference between t3' and t5' is equal to a time difference between t2 and t4, and a time difference between t5' and t6' is equal to a time difference between t4 and t5, it may be considered that the path #2 and the path #3' are a same path, the path #4 and the path #5' are a same path, and the path #5 and the path #6' are a same path. In other words, the 2^{nd} path in the first path is the same as the 3^{rd} path in the second path, the 4^{th} path in the first path is the same as the 5^{th} path in the second path, and the 5^{th} path in the first path is the same as the 6^{th} path in the second path. That is, when m=2, n=3; when m=4, n=5; and when m=5, n=6.

Because time differences between moments of receiving a reference signal through different paths are usually different, in other words, the time differences are usually uneven, same corresponding paths of the first path and the second path can be relatively accurately determined in a manner of comparing the time differences.

It may be understood that if the first indication information indicates a time difference between moments at which the second device receives the first reference signal through different paths in the plurality of paths, the m^{th} path in the first path and the n^{th} path in the second path may also be determined as the same path in a manner the same as the foregoing manner. Details are not described herein again.

In some possible scenarios, whether the m^{th} path in the first path and the n^{th} path in the second path are the same path cannot be accurately determined in the foregoing manner of comparing the time differences. For example, in the foregoing example, if t2'=t3', the first device cannot accurately determine which path in the path #2' and the path #3' is the same as the path #2. In view of this, the information about the second path may further include information about signal strength of the second path. The information about the signal strength of the second path may also be understood as information about strength of a signal received through the second path. The information about the signal strength of the second path and the information about the signal strength of the plurality of paths in the information about the first path may be used to assist the first device in determining that the m^{th} path in the first path and the n^{th} path in the second path are the same path. For example, in the foregoing example, t2'=t3', signal strength of both the path #3' and the path #2 is relatively strong, and signal strength of the path #2' is relatively weak. In this case, the first device may determine that the path #2 and the path #3' are a same path.

Optionally, the method 1200 further includes: The first device receives the second reference signal from the second device through the second path, so that the first device can learn of the information about the second path. For example, the moment at which the first device receives the second reference signal through the second path and/or the information about the signal strength of the second path may be learned.

In this embodiment, if the m^{th} path in the first path and the n^{th} path in the second path are the same path, the moment at which the second device receives the first reference signal through the m^{th} path in the first path and the moment at which the first device receives the second reference signal through the n^{th} path in the second path may be used for calculating the propagation delay.

For example, if the first device determines, based on the information about the first path, that a plurality of paths in the first path are correspondingly the same as a plurality of paths in the second path, moments of receiving reference signals through a group of same corresponding paths may be used as moments that are recorded by the first device and the second device and that are used for calculating the propagation delay, so that the moments at which the first device and the second device receive the reference signals through the group of paths can be used for calculating the propagation delay. For example, the first device determines, based on the information about the first path, that the 2^{nd} path in the first path is the same as the 3^{rd} path in the second path, the 4^{th} path in the first path is the same as the 5^{th} path in the second path, and the 5^{th} path in the first path is the same as the 6^{th} path in the second path. In this case, there are the following three solutions for calculating the propagation delay:
Solution 1: A moment at which the second device receives the first reference signal through the 2^{nd} path in the first path is used as a moment that is recorded by the second device and that is used for calculating the propagation delay, and a moment at which the first device receives the second reference signal through the 3^{rd} path in the second path is used as a moment that is recorded by the first device and that is used for calculating the propagation delay.
Solution 2: A moment at which the second device receives the first reference signal through the 4^{th} path in the first path is used as a moment that is recorded by the second device and that is used for calculating the propagation delay, and a moment at which the first device receives the second reference signal through the 5^{th} path in the second path is used as a moment that is recorded by the first device and that is used for calculating the propagation delay.
Solution 3: A moment at which the second device receives the first reference signal through the 5^{th} path in the first path is used as a moment that is recorded by the second device and that is used for calculating the propagation delay, and a moment at which the first device receives the second reference signal through the 6^{th} path in the second path is used as a moment that is recorded by the first device and that is used for calculating the propagation delay.

Optionally, the first device and the second device may use, by default, moments of receiving the reference signals through a first group of same corresponding paths (initial paths), as the moments that are recorded by the first device and the second device and that are used for calculating the propagation delay. In other words, the foregoing solution 1 is used by default to calculate the propagation delay.

Optionally, the information about the first path includes the second indication information, and the second indication information may indicate the m^{th} path in the first path. For example, the second indication information may indicate the 4^{th} path in the first path, that is, m=4, and the 4^{th} path in the first path is the same as the 5^{th} path in the second path. In this case, the moment at which the second device receives the first reference signal through the 4^{th} path in the first path and the moment at which the first device receives the second reference signal through the 5^{th} path in the second path may be used for calculating the propagation delay.

The following uses two specific scenarios as examples to describe a manner of calculating the propagation delay by using the moment at which the second device receives the first reference signal through the m^{th} path in the first path and the moment at which the first device receives the second reference signal through the n^{th} path in the second path.

Scenario 1: The first device is a network device (for example, the base station in FIG. 6 or FIG. 7), and the second device is a terminal device (for example, the UE in FIG. 6 or FIG. 7). In this scenario, a moment at which the terminal device receives the first reference signal (a downlink reference signal) through the m^{th} path in the first path may be used as a moment that is recorded by the terminal device and that is used for calculating the propagation delay, for example, the moment t2 in FIG. 6 or FIG. 7. Correspondingly, a moment at which the network device receives the second reference signal (an uplink reference signal) through the n^{th} path in the second path may be used as a moment that is recorded by the network device and that is used for calculating the propagation delay, for example, the moment t4 in FIG. 6 or FIG. 7. Based on the moment t2 and the moment t4, an RTT may be obtained through calculation, to further obtain the propagation delay.

Scenario 2: The first device is a terminal device (for example, the UE in FIG. 6 or FIG. 7), and the second device is a network device (for example, the base station in FIG. 6 or FIG. 7). In this scenario, a moment at which the network device receives the first reference signal (an uplink reference signal) through the m^{th} path in the first path may be used as a moment that is recorded by the network device and that is used for calculating the propagation delay, for example, the moment t4 in FIG. 6 or FIG. 7. Correspondingly, a moment at which the terminal device receives the second reference signal (a downlink reference signal) through the n^{th} path in the second path may be used as a moment that is recorded by the terminal device and that is used for calculating the propagation delay, for example, the moment t2 in FIG. 6 or FIG. 7. Based on the moment t2 and the moment t4, an RTT may be obtained through calculation, to further obtain the propagation delay.

It should be understood that, in the foregoing two scenarios, for a specific manner of calculating the RTT and the propagation delay based on the moment t2 and the moment t4, reference may be made to the foregoing descriptions about FIG. 6 or FIG. 7. To avoid repetition, details are not described herein again.

It should be further understood that, in some scenarios, the first device and the second device may alternatively be both terminal devices. This is not limited in this application.

It may be understood that the examples in FIG. 8 to FIG. 12 in embodiments of this application are merely intended to help a person skilled in the art understand embodiments of this application, but are not intended to limit embodiments of this application to specific scenarios in the examples. A person skilled in the art may apparently make various equivalent modifications or changes based on the examples shown in FIG. 8 to FIG. 12, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that in embodiments of this application, numbers such as first, second, #1, and #2 are merely used for differentiation for ease of description, and are not used to limit the scope of embodiments of this application.

It may be further understood that, the formulas used in embodiments of this application are examples for description, and do not constitute a limitation on the protection scope of embodiments of this application. In a process of calculating the foregoing related parameters, calculation may be performed according to the foregoing formulas, calculation may be performed according to variations of the foregoing formulas, calculation may be performed according to a formula determined by using the method provided in embodiments of this application, or calculation may be performed in another manner to satisfy a result of calculation of the formulas.

It may be further understood that some message names in embodiments of this application do not limit the protection scope of embodiments of this application.

It may be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It may be further understood that, in the foregoing method embodiments, methods and operations implemented by a device (for example, the first device, the second device, the third device, or the fourth device) may also be implemented by a component (for example, a chip or a circuit) of the device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 13 is a block diagram of a timing apparatus according to an embodiment of this application. The apparatus 1300 includes a transceiver unit 1310. The transceiver unit 1310 may be configured to implement a corresponding communication function. The transceiver unit 1310 may also be referred to as a communication interface or a communication unit.

Optionally, the apparatus 1300 further includes a processing unit 1320, and the processing unit 1320 may be configured to implement a corresponding processing function.

Optionally, the apparatus 1300 further includes a storage unit. The storage unit may be configured to store instructions and/or data. The processing unit 1320 may read the instructions and/or the data in the storage unit, so that the apparatus implements actions of the device (for example, the first device, the second device, the third device, or the fourth device) in the foregoing method embodiments.

In a first design, the apparatus 1300 may be the device (for example, the first device) in the foregoing embodiments, or may be a component (for example, a chip) of the device. For example, the apparatus 1300 may implement steps or procedures performed by the first device in the foregoing method embodiments. The transceiver unit 1310 may be configured to perform receiving/sending-related operations of the first device in the foregoing method embodiments. The processing unit 1320 may be configured to perform processing-related operations of the first device in the foregoing method embodiments. When the apparatus 1300 is the first device, the transceiver unit 1310 may be a transceiver or an input/output interface, and the processing unit 1320 may be at least one processor. Optionally, the transceiver may be a transceiver circuit. Optionally, the input/output interface may be an input/output circuit. When the apparatus 1300 is a chip, a chip system, or a circuit in the first device, the transceiver unit 1310 may be an input/output interface, an interface circuit, an output circuit, an input circuit, a pin, a related circuit, or the like in the chip, the chip system, or the circuit; and the processing unit 1320 may be at least one processor, a processing circuit, a logic circuit, or the like.

In a possible implementation, the transceiver unit 1310 is configured to send a first reference signal to a second device. A moment at which a baseband of the apparatus 1300 sends the first reference signal is a first moment, and a moment at which a baseband of the second device receives the first reference signal is a second moment. The transceiver unit 1310 is further configured to receive a second reference signal from the second device. A moment at which the baseband of the apparatus 1300 receives the second reference signal is a third moment, and a moment at which the baseband of the second device sends the second reference signal is a fourth moment. The transceiver unit 1310 is further configured to receive a first duration from the second device. The first duration is related to the second moment and the fourth moment. The processing unit 1320 is configured to calculate a propagation delay between the apparatus 1300 and the second device based on the first moment, the third moment, and the first duration.

Optionally, the first duration is a difference obtained by subtracting the fourth moment from the second moment, or the first duration is a difference obtained by subtracting the second moment from the fourth moment.

Optionally, the processing unit 1320 is further configured to calculate the propagation delay between the apparatus 1300 and the second device based on the first duration and a second duration. The second duration is a difference obtained by subtracting the first moment from the third moment.

Optionally, the processing unit 1320 is further configured to calculate the propagation delay between the apparatus 1300 and the second device based on a sum of the first duration and the second duration, where the first duration is a difference obtained by subtracting the fourth moment from the second moment; or the processing unit 1320 is further configured to calculate the propagation delay between the apparatus 1300 and the second device based on a difference obtained by subtracting the first duration from the second duration, where the first duration is a difference obtained by subtracting the second moment from the fourth moment.

Optionally, the transceiver unit 1310 is further configured to send the propagation delay to the second device; or the transceiver unit 1310 is further configured to send, to the second device, a time calculated based on the propagation delay.

In another possible implementation, the transceiver unit 1310 is configured to receive information about a first path from a second device. The first path is a path through which the second device receives a first reference signal from the apparatus 1300. The processing unit 1320 is configured to determine, based on the information about the first path, that an m^{th} path in the first path and an n^{th} path in a second path are a same path. The second path is a path through which the apparatus 1300 receives a second reference signal from the second device. A moment at which the second device receives the first reference signal through the m^{th} path in the first path and a moment at which the apparatus 1300 receives the second reference signal through the n^{th} path in the second path are used for calculating a propagation delay between the apparatus 1300 and the second device, where m and n are positive integers.

Optionally, the transceiver unit 1310 is further configured to receive the second reference signal from the second device through the second path; and the processing unit 1320 is further configured to determine, based on the information about the first path and information about the second path, that the m^{th} path in the first path and the n^{th} path in the second path are the same path.

Optionally, the information about the first path includes first indication information. The first indication information indicates moments at which the second device receives the first reference signal through a plurality of paths in the first path. The plurality of paths include the m^{th} path in the first path.

Optionally, the information about the first path further includes one or more of the following information: information about signal strength of the plurality of paths; or second indication information, where the second indication information indicates the m^{th} path in the first path.

Optionally, the information about the second path includes: a moment at which the apparatus 1300 receives the second reference signal through the second path.

In a second design, the apparatus 1300 may be the device (for example, the second device) in the foregoing embodiments, or may be a component (for example, a chip) of the device. For example, the apparatus 1300 may implement steps or procedures performed by the second device in the foregoing method embodiments. The transceiver unit 1310 may be configured to perform receiving/sending-related operations of the second device in the foregoing method embodiments. When the apparatus 1300 is the second device, the transceiver unit 1310 may be a transceiver or an input/output interface. Optionally, the transceiver may be a transceiver circuit. Optionally, the input/output interface may be an input/output circuit. When the apparatus 1300 is a chip, a chip system, or a circuit in the second device, the transceiver unit 1310 may be an input/output interface, an interface circuit, an output circuit, an input circuit, a pin, a related circuit, or the like on the chip, the chip system, or the circuit.

In a possible implementation, the transceiver unit 1310 is configured to receive a first reference signal from a first device. A moment at which a baseband of the apparatus 1300 receives the first reference signal is a second moment, and a moment at which a baseband of the first device sends the first reference signal is a first moment. The transceiver unit 1310 is further configured to send a second reference signal to the first device. A moment at which the baseband of the apparatus 1300 sends the second reference signal is a fourth moment, and a moment at which the baseband of the first device receives the second reference signal is a third moment. The transceiver unit 1310 is further configured to send a first duration to the first device. The first duration is related to the second moment and the fourth moment. The first moment, the third moment, and the first duration are used for calculating a propagation delay between the first device and the apparatus 1300.

Optionally, the first duration is a difference obtained by subtracting the fourth moment from the second moment, or the first duration is a difference obtained by subtracting the second moment from the fourth moment.

Optionally, the transceiver unit 1310 is further configured to receive the propagation delay from the first device; or the transceiver unit 1310 is further configured to receive, from the first device, a time calculated based on the propagation delay.

In another possible implementation, the transceiver unit 1310 is configured to receive a first reference signal from a first device through a first path. The transceiver unit 1310 is further configured to send information about the first path to the first device. The information about the first path is used for determining that an m^{th} path in the first path and an n^{th} path in a second path are a same path. The second path is a path through which the first device receives a second reference signal from the apparatus 1300. A moment at which the apparatus 1300 receives the first reference signal through the m^{th} path in the first path and a moment at which the first device receives the second reference signal through the n^{th} path in the second path are used for calculating a propagation delay between the first device and the apparatus 1300, where m and n are positive integers.

Optionally, the transceiver unit 1310 is further configured to send the second reference signal to the first device through the second path. Information about the second path is used for determining that the m^{th} path in the first path and the n^{th} path in the second path are the same path.

Optionally, the information about the first path includes first indication information. The first indication information indicates moments at which the apparatus 1300 receives the first reference signal through a plurality of paths in the first path. The plurality of paths include the m^{th} path in the first path.

Optionally, the information about the first path further includes one or more of the following information: information about signal strength of the plurality of paths; or second indication information, where the second indication information indicates the m^{th} path in the first path.

Optionally, the information about the second path includes: a moment at which the first device receives the second reference signal through the second path.

In a third design, the apparatus 1300 may be the device (for example, the third device) in the foregoing embodiments, or may be a component (for example, a chip) of the device. For example, the apparatus 1300 may implement steps or procedures performed by the third device in the foregoing method embodiments. The transceiver unit 1310 may be configured to perform receiving/sending-related operations of the third device in the foregoing method embodiments. The processing unit 1320 may be configured to perform processing-related operations of the third device in the foregoing method embodiments. When the apparatus 1300 is the third device, the transceiver unit 1310 may be a transceiver or an input/output interface, and the processing unit 1320 may be at least one processor. Optionally, the transceiver may be a transceiver circuit. Optionally, the input/output interface may be an input/output circuit. When the apparatus 1300 is a chip, a chip system, or a circuit in the third device, the transceiver unit 1310 may be an input/output interface, an interface circuit, an output circuit, an input circuit, a pin, a related circuit, or the like in the chip, the chip system, or the circuit; and the processing unit 1320 may be at least one processor, a processing circuit, a logic circuit, or the like.

In a possible implementation, the transceiver unit 1310 is configured to send a first reference signal to a fourth device through a first channel at a first moment. A moment at which the fourth device receives the first reference signal is a second moment. The transceiver unit 1310 is further configured to receive a second reference signal from the fourth device through a second channel at a third moment. A moment at which the fourth device sends the second reference signal is a fourth moment. The second moment is the same as the fourth moment. The processing unit 1320 is configured to determine a second delay based on the first moment, the third moment, and a first delay. The first delay is a first channel delay, and the second delay is a second channel delay; or the first delay is a second channel delay, and the second delay is a first channel delay. The first channel delay is a delay of sending the first reference signal by the apparatus 1300 to the fourth device through the first channel, and the second channel delay is a delay of receiving the second reference signal by the apparatus 1300 from the fourth device through the second channel.

Optionally, the processing unit 1320 is further configured to obtain the first delay.

Optionally, the processing unit 1320 is further configured to determine the second delay based on a third duration and the first delay. The third duration is a difference obtained by subtracting the first moment from the third moment.

Optionally, the processing unit 1320 is further configured to determine the second delay based on a difference obtained by subtracting the first delay from the third duration.

Optionally, the apparatus 1300 is an indoor baseband processing unit BBU, and the fourth device is an active antenna unit AAU.

In a fourth design, the apparatus 1300 may be the device (for example, the fourth device) in the foregoing embodiments, or may be a component (for example, a chip) of the device. For example, the apparatus 1300 may implement steps or procedures performed by the fourth device in the foregoing method embodiments. The transceiver unit 1310 may be configured to perform receiving/sending-related operations of the fourth device in the foregoing method embodiments. When the apparatus 1300 is the fourth device, the transceiver unit 1310 may be a transceiver or an input/output interface. Optionally, the transceiver may be a transceiver circuit. Optionally, the input/output interface may be an input/output circuit. When the apparatus 1300 is a chip, a chip system, or a circuit in the fourth device, the transceiver unit 1310 may be an input/output interface, an interface circuit, an output circuit, an input circuit, a pin, a related circuit, or the like on the chip, the chip system, or the circuit.

In a possible implementation, the transceiver unit 1310 is configured to receive a first reference signal from a third device through a first channel. A moment at which the apparatus 1300 receives the first reference signal is a second moment, and a moment at which the third device sends the first reference signal is a first moment. The transceiver unit 1310 is further configured to send a second reference signal to the third device through a second channel. A moment at which the apparatus 1300 sends the second reference signal is a fourth moment, and a moment at which the third device receives the second reference signal is a third moment. The second moment is the same as the fourth moment. The first moment, the third moment, and a first delay are used for determining a second delay. The first delay is a first channel delay, and the second delay is a second channel delay; or the first delay is a second channel delay, and the second delay is a first channel delay. The first channel delay is a delay of sending the first reference signal by the third device to the apparatus 1300 through the first channel, and the second channel delay is a delay of receiving the second reference signal by the third device from the apparatus 1300 through the second channel.

Optionally, the third device is a baseband unit BBU, and the apparatus 1300 is an active antenna processing unit AAU.

It should be understood that specific processes of performing the foregoing corresponding steps by the units are described in detail in the foregoing method embodiments. For brevity, details are not described herein again.

It should be further understood that the apparatus 1300 herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1300 may be specifically the first device in the foregoing embodiments, and may be configured to perform procedures and/or steps corresponding to the first device in the foregoing method embodiments; or the apparatus 1300 may be specifically the second device in the foregoing embodiments, and may be configured to perform procedures and/or steps corresponding to the second device in the foregoing method embodiments; or the apparatus 1300 may be specifically the third device in the foregoing embodiments, and may be configured to perform procedures and/or steps corresponding to the third device in the foregoing method embodiments; or the apparatus 1300 may be specifically the fourth device in the foregoing embodiments, and may be configured to perform procedures and/or steps corresponding to the fourth device in the foregoing method embodiments. To avoid repetition, details are not described herein again.

The apparatus 1300 in each of the foregoing solutions has a function of implementing a corresponding step performed by a device (for example, the first device, the second device, the third device, or the fourth device) in the foregoing method. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 1310 may alternatively be a transceiver circuit (for example, the transceiver circuit may include a receiving circuit and a transmitting circuit), and the processing unit 1320 may be a processing circuit.

It should be noted that the apparatus in FIG. 13 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

As shown in FIG. 14, an embodiment of this application provides another communication apparatus 1400. The apparatus 1400 includes a processor 1410. The processor 1410 is configured to execute a computer program or instructions stored in the memory 1420, or read data/signaling stored in the memory 1420, to perform the methods in the foregoing method embodiments. Optionally, there are one or more processors 1410.

Optionally, as shown in FIG. 14, the apparatus 1400 further includes the memory 1420. The memory 1420 is configured to store the computer program or instructions and/or data. The memory 1420 may be integrated with the processor 1410, or may be disposed separately. Optionally, there are one or more memories 1420.

Optionally, as shown in FIG. 14, the apparatus 1400 further includes a transceiver 1430. The transceiver 1430 is configured to receive a signal and/or send a signal. For example, the processor 1410 is configured to control the transceiver 1430 to receive a signal and/or send a signal.

In a solution, the apparatus 1400 is configured to implement operations performed by the device (for example, the first device, the second device, the third device, or the fourth device) in the foregoing method embodiments.

For example, the processor 1410 is configured to execute the computer program or the instructions stored in the memory 1420, to implement related operations of the device (such as the first device, the second device, the third device, or the fourth device) in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any other appropriate type of memory.

An embodiment of this application further provides a computer-readable storage medium. The computer-readable storage medium stores computer instructions used to implement the method performed by the device (for example, the first device, the second device, the third device, or the fourth device) in the foregoing method embodiments.

For example, when the computer program is executed by a computer, the computer is enabled to implement the method performed by the device (for example, the first device, the second device, the third device, or the fourth device) in the foregoing method embodiments.

An embodiment of this application further provides a computer program product, including instructions. When the instructions are executed by a computer, the method performed by the device (for example, the first device, the second device, the third device, or the fourth device) in the foregoing method embodiments is implemented.

For explanations and beneficial effects of related content of any one of the apparatuses provided above, refer to a corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A timing method, comprising:
sending, by a first device, a first reference signal to a second device, wherein a moment at which a baseband of the first device sends the first reference signal is a first moment, and a moment at which a baseband of the second device receives the first reference signal is a second moment;
receiving, by the first device, a second reference signal from the second device, wherein a moment at which the baseband of the first device receives the second reference signal is a third moment, and a moment at which the baseband of the second device sends the second reference signal is a fourth moment;
receiving, by the first device, a first duration from the second device, wherein the first duration is related to the second moment and the fourth moment; and
calculating, by the first device, a propagation delay between the first device and the second device based on the first moment, the third moment, and the first duration.

2. The method according to claim 1, wherein
the first duration is a difference obtained by subtracting the fourth moment from the second moment; or
the first duration is a difference obtained by subtracting the second moment from the fourth moment.

3. The method according to claim 1 or 2, wherein
the calculating, by the first device, a propagation delay between the first device and the second device based on the first moment, the third moment, and the first duration comprises:
calculating, by the first device, the propagation delay between the first device and the second device based on the first duration and a second duration, wherein the second duration is a difference obtained by subtracting the first moment from the third moment.

4. The method according to claim 3, wherein
the calculating, by the first device, the propagation delay between the first device and the second device based on the first duration and a second duration comprises:
calculating, by the first device, the propagation delay between the first device and the second device based on a sum of the first duration and the second duration, wherein the first duration is the difference obtained by subtracting the fourth moment from the second moment; or
calculating, by the first device, the propagation delay between the first device and the second device based on a difference obtained by subtracting the first duration from the second duration, wherein the first duration is the difference obtained by subtracting the second moment from the fourth moment.

5. The method according to any one of claims 1 to 4, wherein the method further comprises:
sending, by the first device, the propagation delay to the second device; or
sending, by the first device to the second device, a time calculated based on the propagation delay.

6. A timing method, comprising:
receiving, by a second device, a first reference signal from a first device, wherein a moment at which a baseband of the second device receives the first reference signal is a second moment, and a moment at which a baseband of the first device sends the first reference signal is a first moment;
sending, by the second device, a second reference signal to the first device, wherein a moment at which the baseband of the second device sends the second reference signal is a fourth moment, and a moment at which the baseband of the first device receives the second reference signal is a third moment; and
sending, by the second device, a first duration to the first device, wherein the first duration is related to the second moment and the fourth moment; and
the first moment, the third moment, and the first duration are used for calculating a propagation delay between the first device and the second device.

7. The method according to claim 6, wherein
the first duration is a difference obtained by subtracting the fourth moment from the second moment; or
the first duration is a difference obtained by subtracting the second moment from the fourth moment.

8. The method according to claim 6 or 7, wherein the method further comprises:
receiving, by the second device, the propagation delay from the first device; or
receiving, by the second device from the first device, a time calculated based on the propagation delay.

9. A timing method, comprising:
sending, by a third device, a first reference signal to a fourth device through a first channel at a first moment, wherein a moment at which the fourth device receives the first reference signal is a second moment;
receiving, by the third device, a second reference signal from the fourth device through a second channel at a third moment, wherein a moment at which the fourth device sends the second reference signal is a fourth moment, and the second moment is the same as the fourth moment; and
determining, by the third device, a second delay based on the first moment, the third moment, and a first delay, wherein
the first delay is a first channel delay, and the second delay is a second channel delay; or the first delay is a second channel delay, and the second delay is a first channel delay; and
the first channel delay is a delay of sending the first reference signal by the third device to the fourth device through the first channel, and the second channel delay is a delay of receiving the second reference signal by the third device from the fourth device through the second channel.

10. The method according to claim 9, wherein the method further comprises:
obtaining, by the third device, the first delay.

11. The method according to claim 9 or 10, wherein the determining, by the third device, a second delay based on the first moment, the third moment, and a first delay comprises:
determining, by the third device, the second delay based on a third duration and the first delay, wherein the third duration is a difference obtained by subtracting the first moment from the third moment.

12. The method according to claim 11, wherein the determining, by the third device, the second delay based on a third duration and the first delay comprises:
determining, by the third device, the second delay based on a difference obtained by subtracting the first delay from the third duration.

13. The method according to any one of claims 9 to 12, wherein
the third device is an indoor baseband processing unit BBU, and the fourth device is an active antenna unit AAU.

14. A timing method, comprising:
receiving, by a fourth device, a first reference signal from a third device through a first channel, wherein a moment at which the fourth device receives the first reference signal is a second moment, and a moment at which the third device sends the first reference signal is a first moment; and
sending, by the fourth device, a second reference signal to the third device through a second channel, wherein a moment at which the fourth device sends the second reference signal is a fourth moment, a moment at which the third device receives the second reference signal is a third moment, and the second moment is the same as the fourth moment;
the first moment, the third moment, and a first delay are used for determining a second delay;
the first delay is a first channel delay, and the second delay is a second channel delay; or the first delay is a second channel delay, and the second delay is a first channel delay; and
the first channel delay is a delay of sending the first reference signal by the third device to the fourth device through the first channel, and the second channel delay is a delay of receiving the second reference signal by the third device from the fourth device through the second channel.

15. The method according to claim 14, wherein
the third device is a baseband unit BBU, and the fourth device is an active antenna processing unit AAU.

16. A timing method, comprising:
receiving, by a first device, information about a first path from a second device, wherein the first path is a path through which the second device receives a first reference signal from the first device; and
determining, by the first device based on the information about the first path, that an m^{th} path in the first path and an n^{th} path in a second path are a same path, wherein the second path is a path through which the first device receives a second reference signal from the second device, and
a moment at which the second device receives the first reference signal through the m^{th} path in the first path and a moment at which the first device receives the second reference signal through the n^{th} path in the second path are used for calculating a propagation delay between the first device and the second device, wherein m and n are positive integers.

17. The method according to claim 16, wherein the method further comprises:
receiving, by the first device, the second reference signal from the second device through the second path; and
the determining, by the first device based on the information about the first path, that an m^{th} path in the first path and an n^{th} path in a second path are a same path comprises:
determining, by the first device based on the information about the first path and information about the second path, that the m^{th} path in the first path and the n^{th} path in the second path are the same path.

18. The method according to claim 16 or 17, wherein the information about the first path comprises:
first indication information, wherein the first indication information indicates a moment at which the second device receives the first reference signal through a plurality of paths in the first path, and the plurality of paths comprise the m^{th} path in the first path.

19. The method according to claim 18, wherein the information about the first path further comprises one or more of the following information:
information about signal strength of the plurality of paths; or
second indication information, wherein the second indication information indicates the m^{th} path in the first path.

20. The method according to any one of claims 17 to 19, wherein the information about the second path comprises:
a moment at which the first device receives the second reference signal through the second path.

21. A timing method, comprising:
receiving, by a second device, a first reference signal from a first device through a first path; and
sending, by the second device, information about the first path to the first device, wherein the information about the first path is used for determining an m^{th} path in the first path and an n^{th} path in a second path are a same path, and the second path is a path through which the first device receives a second reference signal from the second device, and
a moment at which the second device receives the first reference signal through the m^{th} path in the first path and a moment at which the first device receives the second reference signal through the n^{th} path in the second path are used for calculating a propagation delay between the first device and the second device, wherein m and n are positive integers.

22. The method according to claim 21, wherein the method further comprises:
sending, by the second device, the second reference signal to the first device through the second path, wherein
information about the second path is used for determining that the m^{th} path in the first path and the n^{th} path in the second path are the same path.

23. The method according to claim 21 or 22, wherein the information about the first path comprises:
first indication information, wherein the first indication information indicates a moment at which the second device receives the first reference signal through a plurality of paths in the first path, and the plurality of paths comprise the m^{th} path in the first path.

24. The method according to claim 23, wherein the information about the first path further comprises one or more of the following information:
information about signal strength of the plurality of paths; or
second indication information, wherein the second indication information indicates the m^{th} path in the first path.

25. The method according to any one of claims 22 to 24, wherein the information about the second path comprises:
a moment at which the first device receives the second reference signal through the second path.

26. A communication apparatus, comprising:
a unit configured to implement the method according to any one of claims 1 to 5, or a unit configured to implement the method according to any one of claims 6 to 8, or a unit configured to implement the method according to any one of claims 9 to 13, or a unit configured to implement the method according to claim 14 or 15, or a unit configured to implement the method according to any one of claims 16 to 20, or a unit configured to implement the method according to any one of claims 21 to 25.

27. A communication apparatus, comprising a processor and a memory, wherein
the memory is configured to store a computer program or instructions, and the processor is configured to execute the computer program or the instructions in the memory, so that the method according to any one of claims 1 to 5 is performed, or the method according to any one of claims 6 to 8 is performed, or the method according to any one of claims 9 to 13 is performed, or the method according to claim 14 or 15 is performed, or the method according to any one of claims 16 to 20 is performed, or the method according to any one of claims 21 to 25 is performed.

28. A computer-readable storage medium, wherein the computer-readable storage medium stores a computer program, and when the computer program runs on a computer, the computer performs the method according to any one of claims 1 to 5, or the computer performs the method according to any one of claims 6 to 8, or the computer performs the method according to any one of claims 9 to 13, or the computer performs the method according to claim 14 or 15, or the computer performs the method according to any one of claims 16 to 20, or the computer performs the method according to any one of claims 21 to 25.

29. A computer program product, wherein the computer program product comprises instructions used to perform the method according to any one of claims 1 to 5, or the computer program product comprises instructions used to perform the method according to any one of claims 6 to 8, or the computer program product comprises instructions used to perform the method according to any one of claims 9 to 13, or the computer program product comprises instructions used to perform the method according to claim 14 or 15, or the computer program product comprises instructions used to perform the method according to any one of claims 16 to 20, or the computer program product comprises instructions used to perform the method according to any one of claims 21 to 25.
